(19)

**Europäisches Patentamt**
**European Patent Office**
**Office européen des brevets**

(11) **EP 4 135 959 B1**

(12) **EUROPEAN PATENT SPECIFICATION**

(45) Date of publication and mention
of the grant of the patent:
**23.07.2025 Bulletin 2025/30**

(21) Application number: **21729630.0**

(22) Date of filing: **16.04.2021**

(51) International Patent Classification (IPC):
**B32B 18/00** (2006.01)  **B82Y 20/00** (2011.01)
**C25D 11/08** (2006.01)  **E04F 13/08** (2006.01)
**F21S 8/00** (2006.01)  **F21S 10/00** (2006.01)
**F21V 7/06** (2006.01)  **F21V 7/22** (2018.01)
**F21V 9/02** (2018.01)  **F21V 13/04** (2006.01)
**F21V 14/04** (2006.01)  **F21V 14/06** (2006.01)
**F21Y 103/10** (2016.01)  **F21Y 105/16** (2016.01)
**F21Y 115/10** (2016.01)  **G02B 1/00** (2006.01)
**C25F 3/20** (2006.01)  **G02B 1/113** (2015.01)
**G02B 1/12** (2006.01)  **G02B 5/02** (2006.01)
**G02B 5/26** (2006.01)

(52) Cooperative Patent Classification (CPC):
**G02B 1/002; B32B 18/00; C25D 11/08; C25F 3/20;**
**F21V 7/22; F21V 9/02; F21V 13/04; G02B 1/113;**
**G02B 5/0284; G02B 5/0294; G02B 5/26;**
B82Y 20/00; C04B 2237/34; C04B 2237/343;
C04B 2237/346; (Cont.)

(86) International application number:
**PCT/IB2021/053151**

(87) International publication number:
**WO 2021/209964 (21.10.2021 Gazette 2021/42)**

(54) **CHROMATIC EFFECT LIGHT REFLECTIVE UNIT**

FARBEFFEKT-LICHTREFLEXIONSEINHEIT

UNITÉ DE RÉFLEXION DE LUMIÈRE À EFFET CHROMATIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **16.04.2020 IT 202000008113**

(43) Date of publication of application:
**22.02.2023 Bulletin 2023/08**

(73) Proprietor: **CoeLux S.r.l.**
**22074 Lomazzo (CO) (IT)**

(72) Inventors:
• **BONANOMI, Simone**
**22074 Lomazzo (CO) (IT)**
• **USSEGLIO NANOT, Sandro**
**22074 Lomazzo (CO) (IT)**
• **BRAZZO, Paolo**
**22074 Lomazzo (CO) (IT)**
• **FOSSATI, Vittorio**
**22074 Lomazzo (CO) (IT)**

(74) Representative: **Mati, Silvia et al**
**Thinx S.r.l.**
**P.le Luigi Cadorna, 10**
**20123 Milano (IT)**

(56) References cited:
**US-A1- 2019 079 220**

• **WANG X ET AL: "Brilliant and tunable color of**
**carbon-coated thin anodic aluminum oxide**
**films", APPLIED PHYSICS LETTERS, A I P**
**PUBLISHING LLC, US, vol. 91, no. 1, 6 July 2007**
**(2007-07-06), pages 11908 - 11908, XP012098942,**
**ISSN: 0003-6951, DOI: 10.1063/1.2754649**

**(Cont. next page)**

- **WOO LEE ET AL: "Porous Anodic Aluminum Oxide: Anodization and Templated Synthesis of Functional Nanostructures", CHEMICAL REVIEWS, vol. 114, no. 15, 13 June 2014 (2014-06-13), US, pages 7487 - 7556, XP055761072, ISSN: 0009-2665, DOI: 10.1021/cr500002z**
- **CHEN HAO MING ET AL: "Controlling Optical Properties of Aluminum Oxide Using Electrochemical Deposition", JOURNAL OF THE ELECTROCHEMICAL SOCIETY, 1 January 2007 (2007-01-01), pages K11, XP055830779, Retrieved from the Internet <URL:https://iopscience.iop.org/article/10.1149/1.2728147/pdf> [retrieved on 20210806], DOI: 10.1149/1.2728147**

(52) Cooperative Patent Classification (CPC): (Cont.)
E04F 13/0871; F21S 8/006; F21S 10/00; F21V 7/06; F21V 14/04; F21V 14/06; F21Y 2103/10; F21Y 2105/16; F21Y 2115/10; G02B 1/12; G02B 1/14; G02B 2207/101; G02B 2207/107

**Description**

Technical field

The present invention relates in general terms to chromatic effect light reflective units and in particular to light reflective units having a nanostructured reflective surface in order to interact with an incident light such as to generate chromatic effects in the reflected light and thus to offer to the observer a particular visual perception thereof. Specifically, the present invention relates to a light reflective unit particularly suitable for use in interior or exterior wall coating structures of buildings.

Background

In the field of wall coating, it is known to use panel structures of various types and materials depending on the particular aesthetic effect that is to be given internally or externally to the building or the particular technical result to be achieved. In exemplary terms, buildings can be coated internally or externally with insulating panels to improve the characteristics of energy consumption, photovoltaic panels for energy recovery through the conversion of solar energy into electricity, shading panels to shield from sunlight and so on. It is also known to coat buildings with coloured panels and/or structures capable of offering a specific chromatic effect, for example to give the facades of the buildings particular aesthetic characteristics.

A highly appreciated aesthetic effect for the coating of building walls is achieved through the use of reflective units of the type described in international application no. PCT/EP2015/001454 of the same Applicant. These reflective units comprise at least one layer of material loaded with nanoparticles that covers the reflective surface so as to interact with the incident light, reproducing the typical chromatic characteristics of the sky and the sun. In particular, the interaction of the incident light with the material loaded with nanoparticles leads to a reflective behaviour that varies as a function of the wavelength, presenting a regular spectral reflectance (hereinafter simply regular reflectance) that is greater in red than in blue and, vice versa, a diffuse spectral reflectance (hereinafter simply diffuse reflectance) that is higher in blue than in red. In the context of this description and the subsequent claims, the terms "regular reflectance" and "diffuse reflectance" refer to the definitions provided in the E284 standard relating to the terminology describing the appearance of materials and light sources (ASTM E284 -09a, Standard Terminology of Appearance, ASTM International, West Conshohocken, PA, 2009). Furthermore, the term "spectral" refers to the regular reflectance and diffuse reflectance evaluated as a function of the wavelengths of light.

Another type of facade coating unit with chromatic effect is known from the international application no. PCT/EP2016/066995 of the same Applicant. This unit provides a support structure and a chromatic reflective layer formed on the support structure. The chromatic reflective layer comprises a reflective layer and a chromatic diffusing layer with characteristics similar to those described above. Otherwise, the chromatic facade unit comprises an absorbent medium provided in or on the chromatic diffusing layer and/or on the reflective layer, which is configured to absorb electromagnetic radiations with wavelength in the infrared.

This reflective behaviour, and in particular the dependence of the regular and diffuse reflection of the wavelength of the incident light, generates a light blue colouring of the illuminated panel, observed outside the regularly reflected beam of light. This bluish colouring is given to the panel by the light reflected diffusedly, or subsequently simply diffused. In contrast, the regularly reflected light is characterized by a correlated colour temperature (CCT) lower than the CCT of incident light, as regular reflectance is greater for wavelengths in the red than for wavelengths in the blue region.

Specifically, the Applicant has found that the aesthetic effect obtained through the reflective units described in international applications no. PCT/EP2015/001454 and no. PCT/EP2016/066995 is characterized by:

-   a regularly reflected beam having chromatic coordinates comprised in a region of the colour plane CIE 1976 u'-v' with coordinates u'> 0.210 and v'> 0.470 and a maximum Cartesian distance in this colour plane less than 0.1 from the Planck curve referred to the light source which illuminates the reflective unit, where such light source is a standard illuminator CIE E; and

-   a diffused reflected beam having chromatic coordinates comprised in a region of the colour plane with coordinates u'<0.210 and v'<0.430.

The realization of nanoparticle reflective units of the known type requires the coating layer in a material loaded with nanoparticles to be applied in an extremely uniform manner in order to preserve the appearance homogeneity of the illuminated unit. A non-uniformity, for example, in the thickness of the coating layer results in a non-homogeneous colouring of the reflective unit when illuminated. However, the deposition of strictly uniform layers requires the use of expensive techniques, mostly resulting in a high percentage of waste. In addition, it is highly complex to obtain a thickness uniformity in case the reflective units have to form panels with a non-flat conformation - for example stepped, embossed, microstructured or ashlar. In fact, at the folds, the coating layer undergoes thickening and/or thinning which modify the appearance of the panel at that point, when illuminated by a light source.

The Applicant has therefore strongly perceived the need to realize a chromatic effect light reflective unit particularly suitable for use in building wall coating structures which on the one hand can be made using simple and inexpensive techniques, and on the other hand, is able to offer a uniform chromatic effect.

In particular, the Applicant has identified the need to realize chromatic effect light reflective units which are particularly suitable for use in coating structures for building facades. Within the scope of this object, the Applicant has recognized the need to realize a chromatic effect light reflective unit which is capable of guaranteeing a homogeneous chromatic effect even in the case of surface conformations that are not strictly planar.

Document WANG X ET AL: "Brilliant and tunable color of carbon-coated thin anodic aluminum oxide films" APPLIED PHYSICS LETTERS, A I P PUBLISHING LLC, US, vol. 91, no. 1, 6 July 2007 (2007-07-06), pages 11908-1 to 11908-3 relates to interference effects given by very thin (less than 300 nm) carbon-coated AAO films. In detail, this document aims to demonstrate that, when a thin AAO film is uniformly coated with carbon, the carbon-coated film exhibits a brilliant and tunable interference color with much higher saturation than the pristine AAO film. According to the conclusions of Wang et al., this phenomenon is due to the fact that the carbon layer screens the reflected light on AAO-Al interface.

Document WOO LEE ET AL: "Porous Anodic Aluminum Oxide: Anodization and Templated Synthesis of Functional Nanostructures" CHEMICAL REVIEWS, vol. 114, no. 15, 13 June 2014 (2014-06-13), pages 7487-7556 is a general review on aluminum oxidation.

Summary of the invention

In a first aspect, the present invention is directed to a chromatic effect light reflective unit according to claim 1.

By "range of red" it is meant a range of wavelengths comprised between 600 nm and 740 nm.

By "range in blue " it is meant in a broad sense a range of wavelengths comprised between 380 nm and 500 nm, thus also comprising the wavelengths that conventionally range from violet to cyan.

Advantageously, the nano-pore or nano-pillar layer allows obtaining chromatic effects similar to those obtained through a layer of material loaded with nanoparticles of the type described in the international patent application no. PCT/EP2015/001454, when illuminated by a collimated beam of incident light, wherein by collimated beam it is meant a beam of light having a main direction of propagation and an angular divergence around said direction of propagation less than 45°, preferably less than 10°, even more preferably less than 2°. In addition, the nano-pore or nano-pillar layer is particularly resistant and offers a high degree of uniformity. In particular, thanks to the solution according to the present invention it is possible to obtain a chromatic diffusion layer of constant thickness even when the light reflective unit comprises concavity and convexity. In other words, it is possible to obtain uniform diffuse reflectance and regular reflectance coefficients along the surface of the unit - i.e. the regular reflectance and the diffuse reflectance do not depend on the specific local conformation of the surface - even for light reflective units with non-flat conformation, for example stepped, embossed, microstructured or ashlar.

The unit according to the present invention can comprise one or more of the following additional characteristics, which can also be combined together at will in order to satisfy specific requirements defined by a corresponding application purpose.

In a variant of the invention, the unit can have a regular reflectance in blue R(450nm) - measured at the wavelength equal to 450 nm by way of reference - which is comprised in the range from 0.05 to 0.95, preferably from 0.1 to 0.9. In some examples, the regular reflectance in blue R(450nm) is comprised between 0.2 and 0.8. In variants that want to simulate the presence of a clear blue sky, the regular reflectance in blue R(450nm) can be comprised in the range from 0.4 to 0.95, preferably from 0.5 to 0.9, preferably between 0.6 and 0.8. In variants that want to reduce/minimize the contribution of the reflected scene, the regular reflectance in blue R(450nm) can be comprised in the range from 0.05 to 0.6, preferably from 0.1 to 0.5, preferably from 0.2 up to 0.4.

In a variant of the invention, the regular reflectance in red R(630nm), measured by way of reference at the wavelength equal to 630 nm, is at least 1.05 times, preferably 1.2 times, even more preferably 1.6 times greater than the regular reflectance in blue R(450nm).

In a variant of the invention, the diffuse reflectance in blue R(450nm) is at least 1.2 times, preferably at least 1.4 times, more preferably at least 1.6 times greater than the diffuse reflectance in the red R(630nm).

In a variant of the invention, the regularly reflected beam has a CCT of at least 10% less, preferably at least 15%, more preferably of at least 20% than the CCT of the incident beam.

In a variant of the invention, the diffusely reflected beam has a CCT of at least 20% higher, preferably at least 30%, more preferably of at least 50% than the CCT of the incident beam.

To quantify the chromatic separation it is also possible to define a variation in the CCT of the regularly reflected beam with respect to the CCT of the incident beam. The reduction indicated above is characteristic of a shift of the CCT of the regularly reflected beam towards red and at the same time a shift of the CCT of the diffusely reflected beam towards blue, since the chromatic diffusion layer is made in a first and a second material that are both substantially non-absorbing, or transparent to electromagnetic radiations with wavelength included in the visible spectrum.

In a variant of the invention, the Euclidean distance on the chromaticity diagram CIE 1976 u'-v' between the colour point of the regularly reflected beam $(u'_R, v'_R)$ with respect to the white colour point $(u'_B, v'_B)$ - where $u'_B = 0.210$ and $v'_B = 0.474$ for the standard illuminator defined below - is equal to at least 0.01, preferably 0.015, more preferably 0.02 with $u'_R > u'_B$ and $v'_R > v'_B$. To quantify the chromatic separation it is also possible to calculate a shift of the colour point on the chromaticity diagram CIE 1976 u'-v' between the position of the colour point of the incident beam (white point) and the position of the colour point of the regularly reflected beam. As seen above with reference to the CCT, in the unit according to the invention a shift in the direction of the red of the regularly reflected beam necessarily implies a shift in the direction of the blue of the colour point associable with the diffused light (diffusely reflected light), thus being index of the phenomenon of chromatic separation.

In the context of the present description and the subsequent claims, for the quantification of CCT values, in general and for those indicated above, reference is made to an incident beam produced by a standard illuminator CIE D65. Otherwise, for the quantification of the values u'-v', in general and for those indicated above, reference is made to an incident illumination coming from a white light source, for example a standard illuminator CIE E, which within the visible spectrum radiates equal energy and has a constant spectral power distribution (SPD). Although this is a theoretical reference, the standard illuminator CIE E is particularly suitable in the event of diffusion variability as a function of the wavelengths, as it has a uniform spectral weight with respect to all wavelengths.

According to an embodiment, it is possible to associate to the set of single developments of the nano-pillars or nano-pores with respect to the main direction, an order parameter S defined as $S = 2<\cos^2 \vartheta> - 1$ comprised between 0.7 and 1, more preferably between 0.9 and 1, wherein $\vartheta$ is the angle comprised between the main development direction identified in a section plane transversal to the surfaces of the chromatic diffusion layer and an axis associable with each nano-pillar or nano-pore of a plurality of nano-pillars or nano-pores lying in said section plane. The definition of the order parameter S is defined on the basis of the actual experimental measurement methods adopted by the Applicant and better described below.

Thanks to a high order degree along the axis identified by the directrix, there is greater control over chromatic variability for samples that exhibit it.

In a variant of the invention, the diameter $d_p$ is comprised between 70 nm and 200 nm, preferably comprised between 80 nm and 160 nm.

According to one embodiment, the length along the main direction of the nano-pillars or nano-pores is comprised between 500 nm and 40 $\mu$m (500 nm $< l_p < 20$ $\mu$m), preferably comprised between 500 nm and 20 $\mu$m (500 nm $< l_p < 20$ $\mu$m).

In another variant of the invention, the surface density $D_p$ is such as to define an inter-pore or inter-pillar distance $l_p$ less than 2.8 times the diameter $d_p$, preferably less than 2.6 times the diameter $d_p$, more preferably less than 2.4 times the diameter $d_p$.

In the present description and in the attached claims, by inter-pore or inter-pillar distance $l_p$ it is meant a distance measured starting from one or more images obtained by scanning electron microscopy or SEM showing the second surface of the chromatic diffusion layer, i.e. the distal surface from the reflective layer. In other words, this quantity is measured at the free end of the nano-pillars or nano-pores.

According to an embodiment, the porosity $P_p$ of the structure is comprised between 20% and 80%, preferably between 25% and 75%.

Through tests carried out by the Applicant, the ranges of the geometric parameters have been identified and which allow to establish a chromatic effect in the regular reflection and in the diffuse reflection (or simply diffusion) as a function of the angle of incidence, which is expressed, among other things, in the variation of the CCT of a regularly reflected light beam and/or of the CCT of a light beam reflected diffusely (or simply diffused) by the unit, with respect to the CCT of the incident light beam. This effect occurs in an invariable way or in a static way (slightly variable) - that is, in conditions whereby, being the unit illuminated by a beam collimated along a direction at a certain angle of incidence with respect to the local normal of the surface on which the beam strikes, the CCT of the regularly reflected light beam and/or that of the diffusely reflected light beam do not entirely depend or only weakly depend on this angle of incidence. Alternatively, this effect manifests itself in a variable way - i.e. in conditions so that the CCT of the regularly reflected light beam and/or that of the diffusely reflected light beam depend substantially on the angle of incidence of the beam that illuminates the unit.

According to a different embodiment, the diameter $d_p$ is greater than a diameter threshold value $d_{p\_threshold}$ and/or the length $l_p$ is greater than a length threshold value $l_{p\_threshold}$ such as to provide a variability in the correlated colour temperature of a luminous flux reflected by the unit by regular reflection, as a function of an angle of incidence, preferably comprised between 0° and 60°, of a corresponding luminous flux incident on the unit with wavelength comprised between 380 nm and 740 nm. In particular, the correlated colour temperature of a luminous flux reflected by the unit by regular reflection decreases as the angle of incidence increases. Furthermore, a maximum Euclidean distance $\Delta Rmax(u',v')$

between pairs of colour points of a regularly reflected beam that belong to a plurality of colour points of the regularly reflected beam and identified at different angles of incidence is greater than 0.02.

In particular, in the present description and in the subsequent claims by the terms 'light', 'light beam', 'light ray' or 'luminous flux' it is meant one or more electromagnetic radiations with wavelength included in the visible spectrum (i.e., substantially 380 nm $\leq \lambda \leq$ 740 nm). Furthermore, in the present description and in the subsequent claims, by the expression 'collimated beam of light' or collimated light beam' it is meant a light beam having a main direction of propagation and an angular divergence around this direction of propagation less than 45°, preferably less than 10°, even more preferably less than 2°.

Preferably, when the ratio $n_M/n_m$ between the higher refractive index $n_M$ and the lower refractive index $n_m$ is comprised between 1.7 e 1.9, for example when the first material is aluminium oxide ($n_1$=1.78) and the second material is air ($n_2$=1), the diameter threshold value $d_{p\_threshold}$ is comprised between 50 nm and 120 nm, more preferably between 60 nm and 100 nm, even more preferably it is equal to about 80 nm.

Preferably, when the ratio $n_M/n_m$ between the higher refractive index $n_M$ and the lower refractive index $n_m$ is comprised between 1.7 e 1.9, for example when the first material is aluminium oxide ($n_1$=1.78) and the second material is air ($n_2$=1), the length threshold value $l_{p\_threshold}$ is comprised between 800 nm and 5 $\mu$m, more preferably between 1 $\mu$m and 4 $\mu$m, even more preferably it is equal to about 3 $\mu$m.

Preferably, when the ratio $n_M/n_m$ between the higher refractive index $n_M$ and the lower refractive index $n_m$ is comprised between 1.1 e 1.3, for example when the first material is aluminium oxide ($n_1$=1.78) and the second material has a second refractive index $n_2$ comprised between 1.4 e 1.6, the diameter threshold value $d_{p\_threshold}$ is comprised between 150 nm and 220 nm, more preferably between 160 nm and 200 nm, even more preferably it is equal to about 180 nm.

Preferably, when the ratio $n_M/n_m$ between the higher refractive index $n_M$ and the lower refractive index $n_m$ is comprised between 1.1 and 1.3, for example when the first material is aluminium oxide ($n_1$=1,78) and the second material has a second refractive index $n_2$ comprised between 1.4 and 1.6, the length threshold value $l_{p\_threshold}$ is comprised between 6 $\mu$m and 12 $\mu$m, more preferably between 8 $\mu$m and 10 $\mu$m, even more preferably is about 9 $\mu$m.

Thanks to this solution it is possible to obtain units capable of changing the correlated colour temperature of both a regularly reflected luminous flux and a diffusely reflected luminous flux as a function of the angle of incidence of the beam that illuminates the unit. In particular, the parameters make it possible to obtain surfaces capable of varying chromatic tones in a similar way to the earth's atmosphere based on the position of the sun with respect to the horizon.

According to a different embodiment, the diameter $d_p$ is greater than a second diameter threshold value $d_{p\_threshold\_2}$ and/or the length $l_p$ is greater than a second length threshold value $l_{p\_threshold\_2}$ such as to provide a dichroic reflectance ratio r = R($\lambda_r, \theta$)/ R($\lambda_b, \theta$) of the electromagnetic radiation reflectances at the wavelengths of $\lambda_b$ = 450 nm and $\lambda_r$ = 630 nm of a luminous flux reflected by the unit by regular reflection, increasing as the angle of incidence of a corresponding luminous flux incident on the unit increases and exhibiting a variation of the dichroic reflectance value higher than 5%, preferably higher than 10%, more preferably 15% of the dichroic reflectance value (r) of a luminous flux reflected by the unit by regular reflection in the case of a luminous flux incident on the unit at an angle of incidence of about 10°.

Preferably, when the ratio $n_M/n_m$ between the higher refractive index $n_M$ and the lower refractive index $n_m$ is comprised between 1.7 and 1.9, for example when the first material is aluminium oxide ($n_1$=1,78) and the second material is air ($n_2$=1), the second diameter threshold value $d_{p\_threshold\_2}$ is comprised between 40 nm and 100 nm, preferably between 60 nm and 80 nm, even more preferably it is equal to about 70 nm.

Preferably, when the ratio $n_M/n_m$ between the higher refractive index $n_M$ and the lower refractive index $n_m$ is comprised between 1.7 and 1.9, for example when the first material is aluminium oxide ($n_1$=1,78) and the second material is air ($n_2$=1), the second length threshold value ($l_{p\_threshold\_2}$) is comprised between 300 nm and 2 $\mu$m, preferably between 1 $\mu$m and 1.7 $\mu$m, more preferably it is equal to about 1.4 $\mu$m.

Preferably, when the ratio $n_M/n_m$ between the higher refractive index $n_M$ and the lower refractive index $n_m$ is comprised between 1.1 and 1.3, for example when the first material is aluminium oxide ($n_1$=1,78) and the second material has a second refractive index $n_2$ comprised between 1.4 and 1.6, the diameter threshold value ($d_{p\_threshold}$) is comprised between 150 nm and 190 nm, more preferably between 160 nm and 180 nm, more preferably it is equal to about 170 nm.

Preferably, when the ratio $n_M/n_m$ between the higher refractive index $n_M$ and the lower refractive index $n_m$ is comprised between 1.1 and 1.3, for example when the first material is aluminium oxide ($n_1$=1,78) and the second material has a second refractive index $n_2$ comprised between 1.4 and 1.6, the second length threshold value ($l_{p\_threshold\_2}$) is comprised between 4 $\mu$m and 8 $\mu$m, preferably between 5 $\mu$m and 7 $\mu$m, more preferably it is equal to about 6 $\mu$m.

According to one embodiment, the first material is a metal oxide.

This choice of the first material allows to easily realise a robust and resistant chromatic diffusion layer. In fact, the nano-pillar or nano-pore structure in metal oxide can be obtained in a simple and economical way starting from known oxidation processes - for example, as described in Runge, Jude Mary, "The Metallurgy of Anodizing Aluminum Connecting Science to Practice", 2018, Springer International Publishing - which stimulate the growth of oxide on the metal. This growth takes place in a uniform manner, allowing to obtain layers of substantially any size, characterized by a substantially uniform thickness and therefore able to offer homogeneous chromatic effects.

Furthermore, the metal structure on which the nano-pillar structure is grown can easily assume conformations other than the flat one, without compromising the uniformity of the nano-pillar layer.

Preferably, this metal oxide is aluminium oxide (alumina), titanium oxide (titania) or zinc oxide.

According to the invention, the second material is air, or a polymer, a resin, a silicone, a different oxide (for example deposited by sol-gel) that are transparent or substantially non-absorbent at least to electromagnetic radiations with wavelength included in the visible light spectrum, with refractive index comprised between 1.3 and 1.55. More preferably, the second material has a refractive index between 1.41 and 1.52, for example polyvinyl chloride (PVC), polymethyl methacrylate (PMMA), polyfluorides (e.g. PVDF) or transparent polyacrylates.

By selecting the material in which the nano-pillars or nano-pores structure is immersed, it is possible to further vary the chromatic variability presented by the unit even once the parameters of the nano-pillars or nano-pores have been set.

According to an embodiment, the nano-pillars or nano-pores can have a distribution with respect to the second surface of the chromatic diffusion layer divided into coherence areas extending less than 100 $\mu m^2$, more preferably less than 10 $\mu m^2$, even more preferably less than 1 $\mu m^2$, wherein each nano-pillar or nano-pore within one of said coherence area of the second surface is substantially equidistant from adjacent nano-pillars or adjacent nano-pores, present in the same coherence area.

Within the scope of the present description and in the subsequent claims with "each nano-pillar or nano-pore within a coherence area is equidistant" it is meant that the nano-pillars or nano-pores within this coherence area have the same distance between adjacent pores, unless deviations less than 10% with respect to an average distance value calculated on the basis of the values of distances between adjacent nano-pillars or adjacent nano-pores measured within this area.

The Applicant has found that thanks to this characteristic it is possible to avoid the occurrence of interference phenomena due to the Bragg grating diffraction and the presence of iridescence in the reflected or diffused light with the consequent manifestation of colours, such as for example colours in the region of green or fuchsia unrelated to the colour of the natural light of the sky and the sun. Furthermore, the Applicant has observed that a greater randomness of distribution of the nano-pores or nano-pillars inside the structure favours the establishment of the desired chromatic effect.

According to one embodiment, the unit further comprises an intermediate layer. This intermediate layer is interposed between the chromatic diffusion layer and the reflective layer. Preferably, the intermediate layer being at least partially non-absorbent or transparent to electromagnetic radiations with wavelength included in the visible spectrum.

Thanks to this solution it is possible to couple together a chromatic diffusion layer and a reflective layer that cannot be directly coupled to each other. In addition, by selecting a reflection coefficient and/or a capability of filtering one or more electromagnetic radiations with a predetermined wavelength in order to obtain particular chromatic yields in the light reflected by the unit.

According to another embodiment, the unit further comprises a coating layer, placed at the second surface of the chromatic diffusion layer. Preferably, the coating layer is at least partially non-absorbent or transparent to electromagnetic radiations with wavelength included in the visible spectrum.

Thanks to this solution it is possible to realise chromatic effect light reflective units that are particularly resistant to the wearing action of atmospheric agents.

According to a variant of the invention, the reflective layer comprises a rear surface opposite to its own reflective surface and the unit comprises at least one stiffening composite layer placed at the rear surface of the reflective layer and comprising a shimming panel and a coating sheet, wherein the shimming panel has a specific weight at least 5 times less than the specific weight of the coating sheet, preferably at least 10 times less than the specific weight of the coating sheet. Furthermore, the shimming panel has a thickness at least 2 times higher than the thickness of the coating sheet, preferably at least 5 times higher than the thickness of the coating sheet.

Preferably, the shimming panel is made of a non-combustible material, such as fiberglass, expanded glass granulate, rock fibre, cellular glass, ceramic fibre, carbon fibre, vermiculite (expanded or not), expanded clay or perlite (expanded or not).

Preferably, the shimming panel is made in the form of a grating, such as for example a honeycomb grating with axis of the cells that is orthogonal to the reflective layer, or has a wavy profile according to a section orthogonal to the reflective layer.

Preferably, the coating sheet is made of aluminium and has a thickness comprised between 0.2 mm to 1 mm, preferably equal to about 0.5 mm.

Thanks to the composite stiffening layer, it is possible to realise a lightweight, but at the same time robust unit, while also giving it characteristics of non-flammability and thermal and/or acoustic insulation.

A different aspect in accordance with the present invention proposes a coating element comprising:

- at least one chromatic effect light reflective unit according to one of the embodiments described above;

- a support structure, said support structure being configured to mechanically support the at least one unit so that the second surface of the chromatic diffusion layer faces the external environment, and
- coupling means, configured to allow a mechanical coupling of the support structure to a bearing element.

The coating element makes it possible to coat objects, in particular buildings, in a uniform way, creating surfaces capable of replicating the colouring of the earth's atmosphere when hit by solar radiation or artificially illuminated with white light.

A further aspect in accordance with the present invention relates to an illumination system comprising at least one chromatic effect light reflective unit according to one of the embodiments described above and at least one illuminator to illuminate the at least chromatic effect light reflective unit, the illuminator being configured to emit or project a cone of light which at least partially strikes on the second surface of the chromatic diffusion layer configured to be illuminated by incident light.

Brief Description of the drawings

The accompanying drawings, which are incorporated herein and form part of the description, illustrate exemplary embodiments of the present invention and, together with the description, are intended to illustrate the principles of the present invention.

In the drawings:

Fig. 1 is a sectional perspective view of a light reflective unit according to an embodiment of the present invention;
Figs. 2 - 5 are schematic cut-away axonometric views of a portion of the light reflective unit according to embodiments of the present invention;
Fig. 6 reports SEM images showing the surface of six different chromatic diffusion layers of as many light reflective units according to different embodiments of the present invention;
Figs. 7 and 8 are schematic side views of a portion of a light reflective unit according to an embodiment of the present invention;
Figs. 9 - 11 are SEM images showing sectional side views of three different light reflective units according to embodiments of the present invention;
Fig. 12 corresponds to the view of Fig. 1 in which a chromatic variability effect of the light reflective unit is schematically illustrated according to an embodiment of the present invention;
Fig. 13 is a graph of the course of the regular reflectance of the light reflective unit according to embodiments of the present invention as a function of the wavelength of an electromagnetic radiation as the angle of incidence of a light beam on the unit varies;
Fig. 14 is a graph of the course of the ratio between the reflectance of the unit according to an embodiment of the present invention at two different wavelengths as a function of the angle of incidence of a light beam on the unit;
Figs. 15a and 15b schematically illustrate test arrangements for assessing the chromatic properties of the unit;
Fig. 16 is a representation of the colour plane in which the desired regions of the colour points of the beams reflected regularly and diffusedly by the unit are highlighted;
Fig. 17 schematically illustrates three different coherence areas of the nano-pore structure included in a light reflective unit according to an embodiment of the present invention;
Fig. 18 is a flow chart of a procedure for growing a chromatic diffusion layer comprising a nano-pore structure according to an embodiment of the present invention;
Figs. 19 and 20 are perspective views in side section of two coating elements according to as many embodiments of the present invention;
Fig. 21 is a sectional perspective view of a light reflective unit according to a different embodiment of the present invention;
Fig. 22 is a schematic cut-away axonometric view of a portion of light reflective unit according to an alternative embodiment of the present invention;
Fig. 23 is a sectional perspective view of a light reflective unit according to a further embodiment of the present invention;
Fig. 24 is a sectional perspective view of a light reflective unit according to another embodiment of the present invention;
Fig. 25 is a schematic top view of a portion of light reflective unit according to a different embodiment of the present invention;
Fig. 26 is a schematic view of an illumination system according to a first variant using a light reflective unit according to the present invention;
Figs. 27 and 27a are respectively a schematic view of an illumination system in accordance with a second variant using a light reflective unit according to the present invention and an enlarged detail of the light source used therein;

Figs. 28 and 28a are respectively a schematic view of an illumination system in accordance with a second variant using a light reflective unit according to the present invention and an enlarged detail of the light source used therein;

Fig. 29 is a schematic side view of an illumination system in accordance with a fourth variant using a light reflective unit according to the present invention; and

Figs. 30-33 are schematic representations of preferred embodiments of a grid illumination system using a light reflective unit according to the present invention.

<u>Detailed description</u>

The following is a detailed description of exemplary embodiments of the present invention. The exemplary embodiments described herein and illustrated in the drawings are intended to convey the principles of the present invention, allowing the person skilled in the art to implement and use the present invention in numerous different situations and applications. Therefore, the exemplary embodiments are not intended, nor should they be considered, to limit the scope of patent protection. Rather, the scope of patent protection is defined by the attached claims.

In the following description, for the illustration of the figures, identical numbers or reference symbols are used to indicate construction elements with the same function. Further, for illustration clarity, some references may not be repeated in all the figures.

The use of "for example", "etc.", "or" indicates non-exclusive alternatives without limitation, unless otherwise indicated. The use of "comprises" and "includes" means "comprises or includes, but not limited to", unless otherwise indicated.

Furthermore, the use of measures, values, shapes and geometric references (such as perpendicular and parallel) associated with terms such as "approximately", "almost", "substantially" or similar, is to be understood as "without measurement errors" or "unless inaccuracies due to manufacturing tolerances" and in any case "less than a slight divergence from the values, measures, shapes or geometric references" with which the term is associated.

Finally, terms such as "first", "second", "upper", "lower", "main" and "secondary" are generally used to distinguish components belonging to the same type, not necessarily implying an order or a priority of relationship or position.

*Chromatic effect light reflective unit*

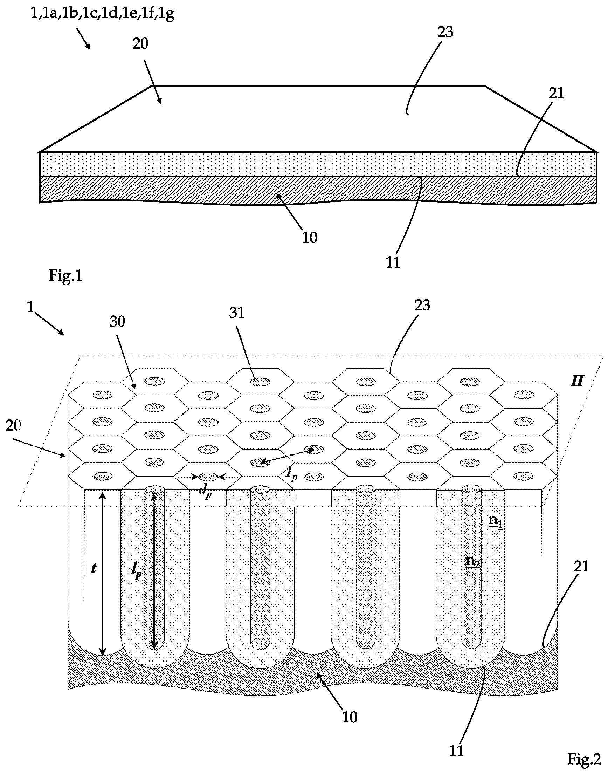

With reference to Fig. 1 it schematically illustrates a chromatic effect light reflective unit, hereinafter referred to as 'unit' for brevity's sake, according to an embodiment of the present invention. The unit 1,1a-1g comprises a reflective layer 10 and a chromatic diffusion layer 20 coupled together.

In detail, the reflective layer 10 comprises at least one surface 11 configured to regularly reflect an incident light beam comprising one or more electromagnetic radiations having wavelengths included at least in the visible spectrum (i.e., $380\,nm \leq \lambda \leq 740\,nm$), also indicated with the terms 'light beam', 'light' ray, 'luminous flux' or 'light' in the following. For example, the reflective layer has a regular reflectance of at least 50%, preferably at least 75%, more preferably at least 90% is made of a metallic material, such as aluminium (Al), titanium (Ti), silver (Ag), zinc (Zn), etc. or an alloy, such as stainless steel, comprising such materials. Optionally, the reflective surface 11 of the reflective layer 10 can be subjected to a polishing process (mechanical or chemical).

The chromatic diffusion layer 20 comprises a first surface 21 proximal to the reflective surface 11 and a second surface 23, opposite and substantially parallel to the first surface 21, separated by a thickness t. In the embodiment considered, the first surface 21 of the chromatic diffusion layer 20 is coupled to the reflective surface 11 of the reflective layer 10, while the second surface 23 faces the external environment. In particular, the second surface 23 is configured to be illuminated by incident light.

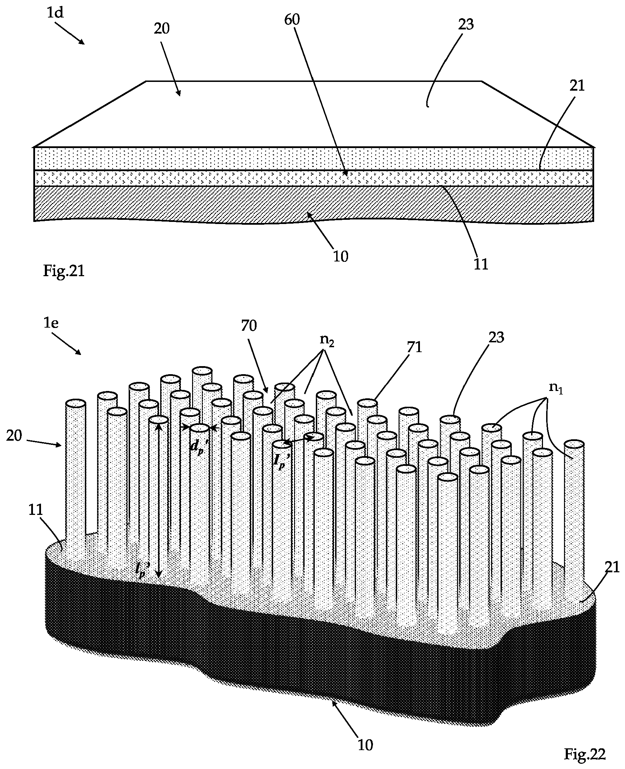

Advantageously, the chromatic diffusion layer 20 comprises a nano-pore 30 structure (illustrated in Figs. 2 - 5) or a nano-pillar 70 structure (illustrated in Fig. 22). This nano-pore 30 or nano-pillar 70 structure is formed in a first material having a first refractive index $n_1$ and is immersed in a second material having a second refractive index $n_2$. For example, the first material that constitutes the nano-pore 30 structure is aluminium oxide, or alumina ($Al_2O_3$), preferably anodic aluminium oxide or AAO (acronym for the expression 'Anodic Aluminum Oxide').

The second material which fills the nano-pore 30 structure or in which the nano-pillar 70 structure is immersed is or a polymer, a resin, a silicone, a different oxide (for example deposited by sol-gel) that are transparent or substantially non-absorbent at least to electromagnetic radiations with wavelength included in the visible light spectrum, with refractive index $n_2$ comprised between 1.3 and 1.55. More preferably, the second material has a refractive index between 1.41 and 1.52, for example polyvinyl chloride (PVC), polymethyl methacrylate (PMMA), polyfluorides (eg PVDF) or transparent polyacrylates.

Preferably, the second material which fills the nano-pore 30 structure or in which the nano-pillar 70 structure is immersed is a resin based on soluble fluoropolymers, in particular a polyurethane resin with a high fluorocarbon content, for example the known resin on the market under the trade name Lumiflon®. In particular, the fluoropolymer-based resin is selected with a refractive index $n_2$ comprised between 1.45 and 1.50, more preferably equal to 1.48.

*Nano-Pore structure*

The nano-pore 30 structure comprises a plurality of nano-pores 31 (as schematically illustrated in Figs. 2 - 5) formed in the first material (for example aluminium oxide), having a distribution that in the specific example of Figs. 2-5 has a substantially hexagonal conformation with respect to a plane $\Pi$ (illustrated in Fig. 2) substantially parallel to the first and second surfaces 21 and 23; for example, the plane in which the second surface 23 of the chromatic diffusion layer 20 lies.

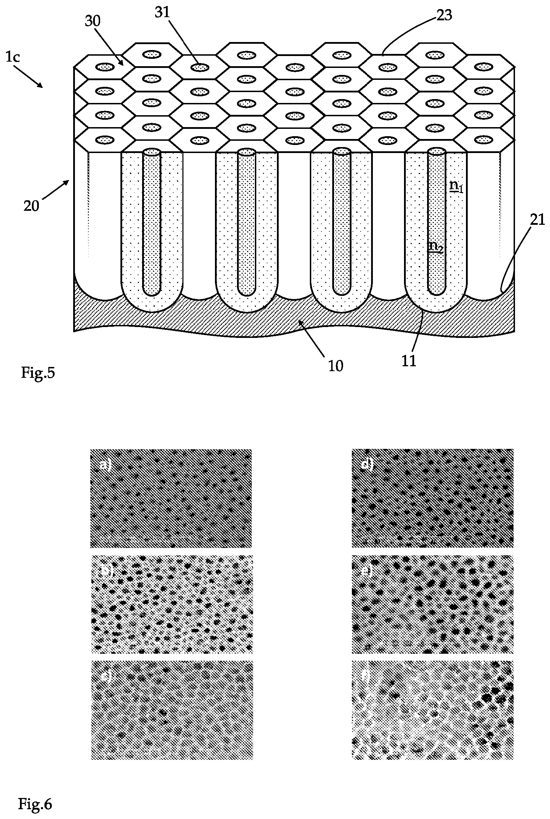

Each nano-pore 31 comprises an opening facing the second surface 23 of the chromatic diffusion layer 20 and extends in the chromatic diffusion layer 20 towards the first surface 21 of this layer 20. As will be evident to the skilled person, the nano-pores 31 have, in general, a non-regular shape as evident in Fig. 6 - which shows six top views a) - f) obtained by scanning electron microscopy (acronym SEM) of as many real nano-pore structures - instead of a regular circular shape as illustrated for simplicity's sake in the schematic examples of Figs. 2 - 5.

Advantageously, the surface dimension of each nano-pore 31 is defined by a diameter $d_p$ corresponding to a circumference that inscribes the pore 31 in the plane $\Pi$. In other words, the diameter $d_p$ is preferably determined at the second surface 23 and is, substantially, a measure of the maximum distance between two points on the edge of the nano-pore 30 structure which delimits a corresponding opening of the nano-pore 31.

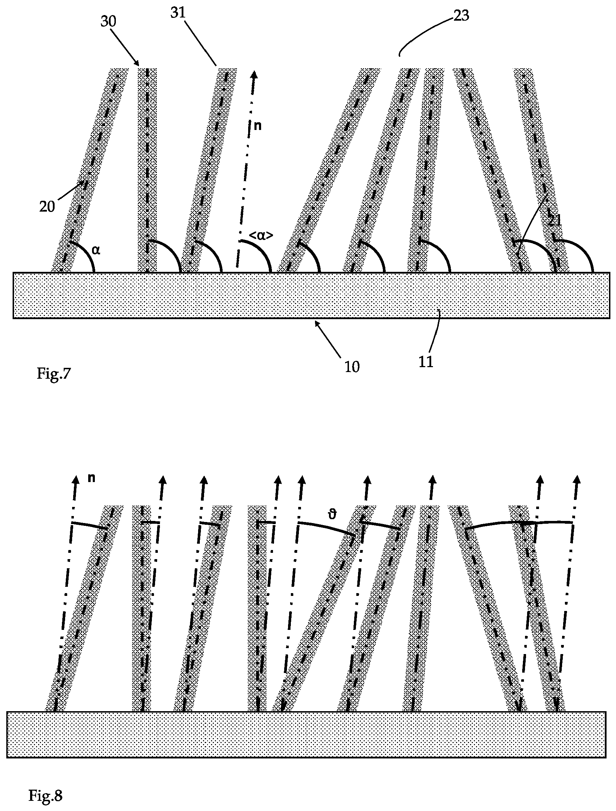

Furthermore, each nano-pore 31 develops from the first surface 21 towards the second surface 23 defining a length dimension $l_p$. Although Figs. 2 - 5 illustrate - for simplicity's sake - pores 31 parallel to each other and orthogonal to the surfaces 21 and 23 of the chromatic diffusion layer 20, the nano-pores 31 extend, in general, for the length dimension $l_p$ along respective nonparallel directions (i.e. transversal) with respect to the first surface 21 and the second surface 23 of the layer 20 and in any case not strictly parallel to each other - as evident in Figs. 7-11, which show side views of real nano-pore 30 structures sectioned along a plane (section plane) substantially transversal to the surfaces 21 and 23 of the chromatic diffusion layer 20 obtained by SEM. In the case of ordered nano-pore 30 structures, it is possible to identify in the section plane a main (group) development direction $\hat{n}$ for the nano-pores 31 - as illustrated in Figs. 7-11 - and characterize the nano-pore 30 structure through a directional order parameter $S$ (twodimensional), measured with respect to the main development direction $\hat{n}$ in the section plane transversal to the surfaces 21 and 23 of the chromatic diffusion layer 20, and calculated as:

$$S = 2<\cos^2\vartheta> - 1, \tag{1}$$

wherein $\vartheta$ is the angle comprised between the main development direction $\hat{n}$ and an axis associable with each nano-pore 31 of a plurality of nano-pillars or nano-pores lying in the section plane. In detail, as illustrated schematically in Fig. 7, the main development direction $\hat{n}$ is defined as the direction identified by the average value $<\alpha>$ of the angles $\alpha$ defined between the intersection straight line between the section plane and the first surface 21- corresponding to the reflective surface 11 of the substrate 10 in the example considered - and each nano-pore 31 along a plane transversal to the surfaces 21 and 23 of the chromatic diffusion layer 20, where the transversal plane coincides with the section plane. As will be evident to the person skilled in the art, in the case of total disorder the average value of $<\cos^2\vartheta>$ is ½, hence S = 0, while for a perfectly ordered system (axes of nano-pores 31 aligned to the directrix) we have $<\cos^2\vartheta>$ = 1, hence S = 1.

In the context of the present description and subsequent claims, the term "ordered nano-pore structure" means a nano-pore 30 structure of the chromatic diffusion layer 20 of the unit 1,1a-1g characterized by a directional order parameter S comprised between 0.7 and 1 (i.e. $0.7 \leq S \leq 1$) or, more preferably between 0.9 and 1 (i.e. $0.9 \leq S \leq 1$) for at least one section plane.

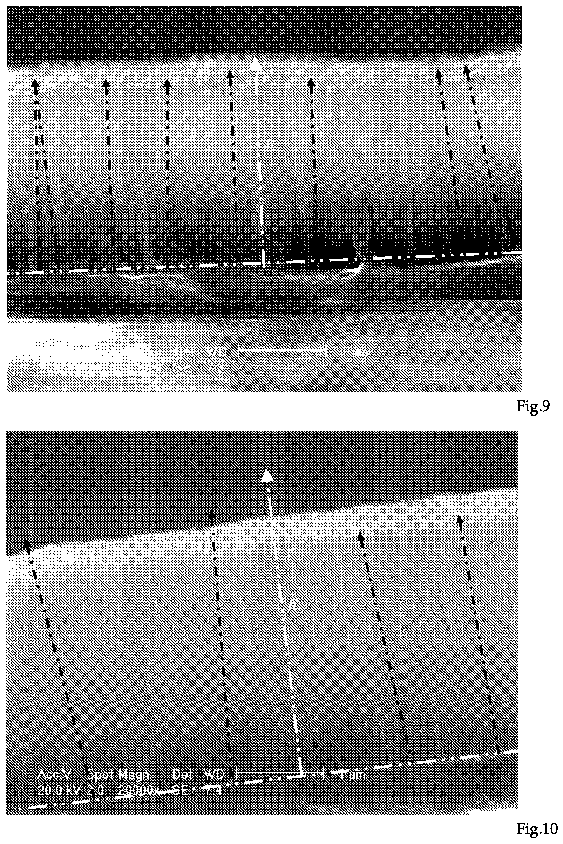

The Applicant has identified that it is possible to determine the order parameter in the following way. Initially, an image of a cross section of the chromatic diffusion layer 20 is collected through scanning electron microscope (SEM) for which it is reasonable to identify the first surface 21 with a substantially straight line. Next, the image is analysed to identify a statistically significant number - for example, equal to or greater than 50 distinct elements - of 31 nano-pores with an aspect ratio between height (i.e., length dimension $l_p$) and width (i.e. diameter $d_p$) of the nano-pore 31 at least equal to 10 - which can reasonably be approximated to a segment. In particular, if a nano-pore 31 defines one or more bifurcations - as visible in Fig. 9 - each bifurcation is considered as a distinct nano-pore 31, where each of such distinct nano-pores 31 shares a common portion. If it is not possible to identify a statistically significant number of nano-pores 31 with this aspect ratio, the image is discarded and a new image is acquired. Subsequently, for each identified nano-pore 31 a development axis is defined, by joining the ends of the nano-pore 31. For each development axis thus defined, an angle $\alpha$ is measured between this axis and the intersection straight line between the section plane and the first surface 21 - in other words, an angle $\alpha$ is measured for each nano-pore 31 with the desired aspect factor, identified in the image. The angles $\alpha$ are then averaged to obtain an average angle $<\alpha>$ along which the main directrix $\hat{n}$ is oriented with respect to the first surface. The deviation

angle $\vartheta$ with respect to the main directrix $\hat{n}$ of the axes of each nano-pore 31 previously considered is therefore measured. Finally, these deviation angles are used for calculating the order parameter S according to the formula (1) above.

The nano-pore 30 structure is also characterized by the ratio $n_M/n_m$ between a higher refractive index $n_M$ a lower refractive index $n_m$ of the refractive indexes $n_1, n_2$ that characterize the first material of which the nano-pores 31 are made and the second nano-pore filling material 31.

In the considered embodiment, the nano-pores 31 are filled with air. Therefore the walls of the pores 31 define an interface surface between the materials characterized by different refractive indexes. Alternatively, other filling materials can be used to fill the nano-pores 31 and obtain different desired refractive index ratios as described below. For example, alternative filling materials comprise, in a non-limiting way, a polymer, a resin, a silicone, a different oxide (for example deposited by sol-gel) that are substantially transparent at least to electromagnetic radiations with wavelength included in the light visible spectrum. In other words, the nano-pore 30 structure is immersed in the selected filling material.

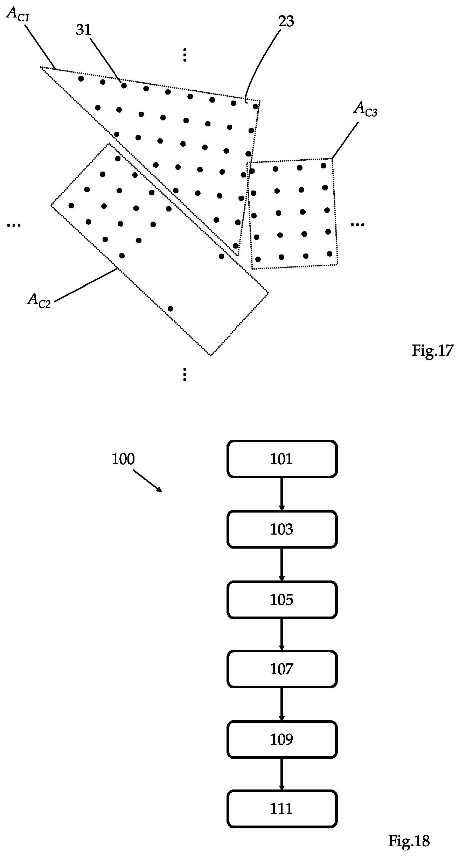

The nano-pore 30 structure is also characterized by a periodicity of the arrangement of the nano-pillars or nano-pores limited to coherence areas $A_{C1}$, $A_{C2}$ and $A_{C3}$, schematically illustrated in Fig. 17, extending less than 100 $\mu$m², more preferably 10 $\mu$m², even more preferably less than 1 $\mu$m², where the coherence areas are sub-portions of the second surface 23. In each of these coherence areas, each nano-pore 31 inside is equidistant from the adjacent nano-pores 31 within the same coherence area. In the present description, the term 'adjacent' is intended to indicate the nano-pores 31 placed at a minimum distance (substantially corresponding to the inter-pore distance $Ip$) from a reference nano-pore 31 along any direction that lies in the reference plane - for example the plane $\Pi$ - and passes through said reference nano-pore 31. The periodicity of the arrangement of the nano-pillars or nano-pores is determined starting from one or more images obtained by scanning electron microscopy or SEM of the second surface 23, of the type illustrated in Fig. 6.

Furthermore, it is possible to define a surface density $D_p$ in terms of number of nano-pores 31 per unit area of the second surface 23 of the chromatic diffusion layer 20 which can be measured as the number of nano-pores per square micron or in terms of (average) distance between adjacent pores, or inter-pores distance $Ip$, and a porosity $P_p$ of the structure 30 defined as the percentage of area occupied by the material having a lower refractive index $n_m$ (for example air) with respect to the area of the second surface 23.

In general terms, therefore, a nano-pore 30 structure according to the invention is of the ordered type, has a limited periodicity and can be characterized through a series of geometric parameters including in particular:

- the diameter $d_p$ of the pores 31;
- the length dimension $l_p$ of the pores 31;
- the surface density $D_p$ of the pores 31;
- the porosity $P_p$; and
- the ratio $n_M/n_m$ between the refractive indexes of the materials making up the structure 30.

The Applicant has determined that, in the case of ordered and limited periodic nano-pore 30 structures, thanks to the combined effect of the chromatic diffusion layer 20 and the reflective layer 10, the control of the aforementioned geometric parameters allows to control the establishment of a chromatic reflective and diffusion effect of the incident light, i.e. a dependence of the regular reflectance and the diffuse reflectance of the unit 1,1a-1g on the wavelength, which, again as a function of these parameters, can be of an invariable type, that is independent of the illumination direction of the unit 1,1a-1g with respect to the normal to its surface, static, that is, weakly dependent on the illumination direction of the unit 1,1a-1g with respect to the normal to its surface, or of variable type, i.e. of a type substantially dependent on this angle of illumination, resulting in distinct chromatic effects of the unit 1,1a-1g perceived by an observer.

The chromatic effects, indicated respectively as chromatically invariable and static, are due to the interaction of a light beam incident on the unit 1,1a-1g with the nano-pore 31 structure so that the unit 1,1a-1g has a higher regular reflectance for wavelengths of incident light comprised in the range of red with respect to wavelengths of incident light comprised in the range of blue. Otherwise, the nano-pore 31 structure affects the diffuse reflectance of the unit 1,1a-1g, making it greater for wavelengths of incident light comprised in the range of blue with respect to wavelengths of the incident light comprised in the range of red. Consequently, when a light beam hits the unit 1,1a-1g, the electromagnetic radiations with wavelengths comprised in the blue (380 nm $\leq \lambda \leq$ 500 nm) of the light beam preferentially undergo a diffusion - also referred to as scattering - with respect to the wavelengths comprised in the range of red (600 nm $\leq \lambda \leq$ 720 nm).

For example, the chromatic effect light reflective unit 1,1a-1g does not substantially absorb light in the visible range and diffuses light at the wavelength of 450 nm (blue) at least 1.2 times, for example at least 1.4 times, as well as at least 1.6 times more efficiently than the light at the wavelength of about 630 nm (red). In other words, at a wavelength of 450 nm (blue) the diffuse reflectance of the unit 1,1a-1g is at least 1.2 times, for example at least 1.4 times, as well as at least 1.6 times greater than the diffuse reflectance at 630 nm (red).

Similarly, the chromatic effect light reflective unit 1,1a-1g regularly reflects light at the wavelength of 630 nm (red) at least 1.05 times, for example at least 1.2 times, as well as at least 1.6 times, more efficiently than the light at the wavelength of about 450 nm (blue). In other words, at the wavelength of 630 nm (red) the regular reflectance of the unit 1,1a-1g is at least 1.05 times, for example at least 1.2 times, as well as at least 1.6 times greater than the regular reflectance at 450 nm (blue).

Consequently, the unit 1,1a-1g assumes a substantially light blue colour - due to the diffuse reflection - when hit by a substantially directional (collimated) beam of white light, for example a beam of white light that strikes on the surface of the unit from a direction which forms an angle $\theta$ with respect to the normal of said surface and having divergence less than 45°, preferably less than 10°, even more preferably less than 2° - for example, solar radiation - if observed from any direction substantially other than the specular direction with respect to the illumination direction, i.e. from a direction such that the observer does not see the specular reflection of the source, for example from a direction forming an angle with the specular direction with respect to the direction of the incident beam greater than semi-divergence of said incident light beam. At the same time the unit, when hit by a directional light beam of white light, assumes a warm colour, for example a yellow colour, or preferably orange, or even more preferably reddish, if observed in the specular direction with respect to the illumination direction, i.e. from a direction such that the observer sees the specular reflection of the source. This first chromatic effect does not vary as the angle of incidence $\theta$ varies and is therefore indicated as chromatically static.

A further chromatic effect, indicated as chromatically variable, occurs at the onset of a dependence of the regular reflectance and/or diffuse reflectance of the unit 1,1a-1g not only on the wavelength, but also on the direction of illumination or of incidence $\theta$.

In other words, the colour whereby an observer sees the unit 1,1a-1g from a direction of observation in proximity to the direction of specular reflection, and possibly, but not necessarily, also the colour whereby an observer sees the unit 1,1a-1g from an observation direction far from the direction of specular reflection, depends on the angle of incidence $\theta$ of the light beam incident on the unit 1,1a-1g.

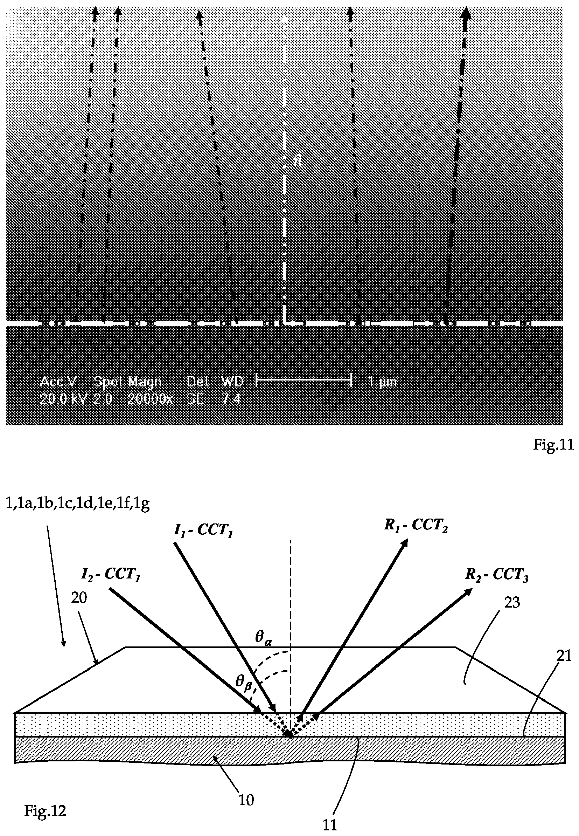

In fact, the correlated colour temperature (acronym CCT) of the regularly reflected beam appears to depend on the angle of incidence $\theta$ of the corresponding incident light beam with respect to the normal to the unit or to the reflective surface 11 of the reflective layer 10. In particular, in the examples considered, the correlated colour temperature of the regularly reflected light beam decreases as the angle of incidence $\theta$ of the light beam incident on the unit 1,1a-1g increases. For example, as schematically illustrated in Fig. 12, when a first light beam $I_1$ having a correlated colour temperature $CCT_1$, strikes on the unit 1,1a-1g with an angle $\theta_\alpha$ with respect to the normal to the reflective surface 11 of the reflective layer 10, a corresponding first regularly reflected light beam $R_1$ will be obtained having a first correlated colour temperature $CCT_2$ other than a second correlated colour temperature $CCT_3$ of a regularly reflected light beam $R_2$ generated by the regular reflection of a second light beam $I_2$ having spectral content and CCT identical to those of the light beam $I_1$, but incident on the unit 1,1a-1g with an angle $\theta_\beta$ with respect to the normal to the reflective surface 11 of the reflective layer 10, other than the angle $\theta_\alpha$. In particular, the first correlated colour temperature $CCT_2$ of the first reflected beam is greater than the second correlated colour temperature $CCT_3$ of the second reflected beam, when the angle $\theta_\beta$ is greater than the angle $\theta_\alpha$.

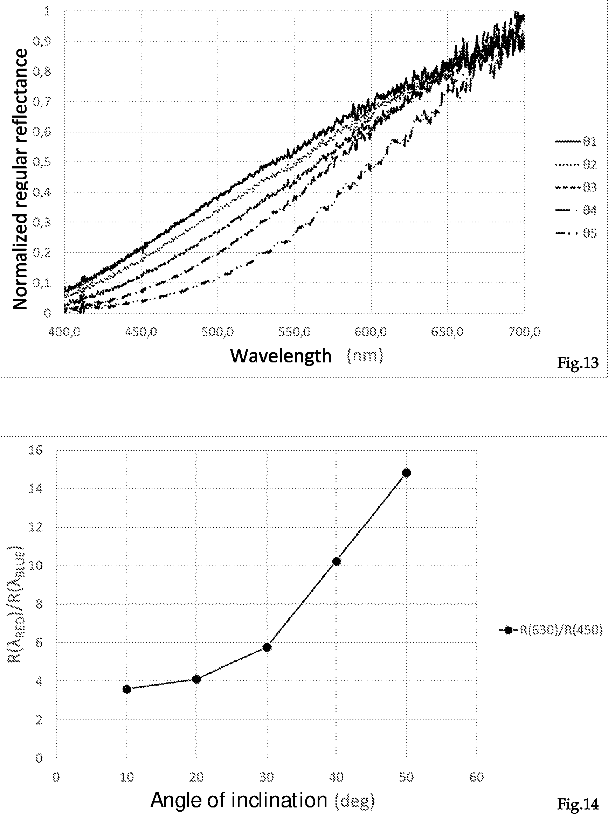

In other words, the chromatic behaviour of the unit 1,1a-1g is dependent on the angle with which a light beam strikes on the unit 1,1a-1g itself. In particular, the regular reflectance R turns out to be a function of the incident wavelength $\lambda$ and of the angle of incidence $\theta$ of a corresponding incident light beam, $R(\lambda, \theta)$, as illustrated in Fig. 13, where the dependence of the regular reflectance $R(\lambda, \theta)$ is traced as a function of the wavelength, normalized to the maximum value of this regular reflectance in the wavelength range and for the angle considered, for different angles of incidence $\theta_1 = 10°$, $\theta_2 = 20°$, $\theta_3 = 30°$, $\theta_4 = 40°$ and $\theta_5 = 50°$ of a corresponding incident light beam. As is evident from Fig. 13, the decrease in the value of the regular spectral reflectance as the wavelength decreases is greater the greater the angle of incidence $\theta$. It results (i) from the increase in diffuse reflectance as the angle $\theta$ increases (i.e. the luminance of the unit 1,1a-1g observed for directions far from that of specular reflection increases as the illumination angle $\theta$ increases), and (ii) from the fact that the diffuse reflectance is greater for wavelengths in the range of blue than in that of red.

The Applicant has determined that it is possible to characterize the chromatic properties of the unit 1,1a-1g in terms of the variation of a ratio between the regular reflectances evaluated at two different wavelengths for different angles of incidence $\theta$. Preferably, the dichroic reflectance ratio $r = R(\lambda_r, \theta)/R(\lambda_b, \theta)$ of the electromagnetic radiation reflectances at the wavelengths of $\lambda_b$ 450 nm and $\lambda_r$ 630 nm, is considered, as shown in Fig. 14. In the total absence of chromatic variation, this ratio r remains almost constant as $\theta$ varies. On the contrary, if there is a chromatic variation, like in the example of Fig. 14, this ratio increases as the angle $\theta$ increases. In particular, in the presence of a variation of the dichroic reflectance value r less than 5%, preferably less than 10%, more preferably less than 15% with respect to the dichroic reflectance value r in the case of a luminous flux incident on unit 1,1a-1g at an angle of incidence of about 10°, then the unit 1,1a-1g is considered chromatically invariable. Above these variation values, the unit 1,1a-1g is considered to be chromatically weakly variable (static) or variable.

On the basis of the foregoing, the Applicant has determined that it is possible to establish the effect of chromatic reflection and diffusion, whether it is invariable, i.e. independent of the angle of incidence, or static, i.e. weakly dependent on the angle of incidence, or, again, variable, i.e. substantially dependent on the angle of incidence, as defined above, by acting on one or more of the following parameters characterizing the ordered nano-pore 30 structures of the chromatic diffusion layer 20:

- the length $l_p$ of the nano-pores 31;
- the surface density $D_p$ of the nano-pores 31 (i.e., the inter-pore distance $lp$);
- the diameter $d_p$ of the nano-pores 31,
- the porosity $P_p$ of the nano-pore 30 structure, and
- the ratio $n_M/n_m$ between the higher refractive index $n_M$ and the lower refractive index $n_m$ between the refractive index $n_2$ of the pore filling material - for example, air - and the refractive index $n_1$ of the material of the nano-pore 30 structure - i.e., aluminium oxide in the example considered.

Tests carried out by the Applicant have made it possible to highlight how the variation of parameters such as the ratio of indexes $n_M/n_m$ of the materials constituting the nano-pore 30 structure, the length of the nano-pores $l_p$, the diameter of the nano-pores $d_p$, the surface density $D_p$ of the nano-pores and the porosity $P_p$ of the nano-pore 30 structure allow to establish an invariable, static or variable chromatic reflection and diffusion effect as the angle of incidence of a corresponding incident light beam of white light varies.

In particular, the Applicant has determined that, in some embodiments, due to the establishment of chromatic reflection and diffusion effects, the ratio $n_M/n_m$ between the higher refractive index $n_M$ and the lower refractive index $n_m$ between the refractive index $n_1$ of the first material and the refractive index $n_2$ of the second material must be comprised between 1.05 and 3, wherein, the refractive indexes $n_1$ and $n_2$ are calculated according to standard refractive index measurements measured with wavelength equal to 589.29 nm.

In other embodiments, the Applicant has found that for the establishment of chromatic reflection and diffusion effects, the ratio $n_M/n_m$ must be preferably comprised between 1.10 and 1.8, more preferably between 1.15 and 1.4 or between 1.6 and 1.78.

In other embodiments, the Applicant has found that for the establishment of chromatic reflection and diffusion effects, the ratio $n_M/n_m$ must be preferably comprised between 1.7 and 2.7, more preferably between 1.7 and 2.05 or between 2.45 and 2.65.

In further embodiments, the Applicant has found that for the establishment of chromatic reflection and diffusion effects, the ratio $n_M/n_m$ must be preferably comprised between 1.4 and 2.1, more preferably between 1.45 and 1.7 or between 1.95 and 2.05.

Furthermore, the Applicant has highlighted how, in some embodiments, the chromatic reflection and diffusion effects of the incident light occur due to:

- diameters $d_p$ of the nano-pores 31 comprised between 40 nm and 300 nm, resulting particularly intense for diameters $d_p$ of the nano-pores or nano-pillars 31 comprised between 70 nm and 200 nm, and
- lengths $l_p$ of the nano-pores 31 comprised between 300 nm and 200 $\mu$m (300 nm $< l_p <$ 200 $\mu$m), preferably comprised between 300 nm and 100 $\mu$m (300 nm $< l_p <$ 100 $\mu$m), more preferably comprised between 300 nm and 40 $\mu$m (300 nm $< l_p <$ 40 $\mu$m).

The Applicant has also observed how, in some embodiments, the chromatic reflection and diffusion effects of the incident light occur for surface densities $D_p$ such as to define an inter-pore distance $l_p$ less than 2.8 times the diameter $d_p$, preferably less 2.6 times the diameter $d_p$, more preferably less than 2.4 times the diameter $d_p$ and/or porosity $P_p$ comprised between 20% and 80%, preferably between 25% and 75%.

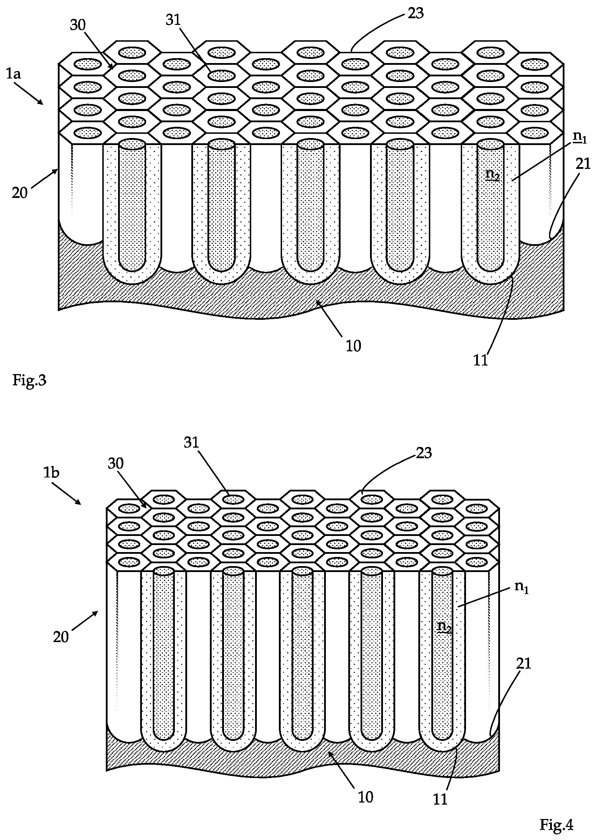

By way of example, Fig. 3 schematically illustrates a unit 1a which comprises a nano-pore 30 structure characterized by dimensional parameters falling within the ranges indicated above.

The Applicant has in particular observed that, in some embodiments, there is an interdependence between the diameters $d_p$ of the nano-pores 31 and lengths $l_p$ of the nano-pores 31 such that in the case of diameters $d_p$ of the nano-pores 31 greater than 70 nm ($d_p >$ 70 nm) a chromatic reflection and diffusion effect is established already for lengths $l_p$ of the nano-pores 31 comprised between 300 nm and 40 $\mu$m (300 nm $< l_p <$ 40 $\mu$m), allowing to shorten the production of the chromatic diffusion layer 20.

The Applicant has also identified, in some embodiments, that in the presence of nano-pore 30 structures in which the length $l_p$ of the nano-pores 31 is greater than a length threshold value $l_{p\_threshold}$ and in any case less than 200 $\mu$m, preferably less than 100 $\mu$m, the chromatic diffusion effect of the incident light is of a variable type. In particular, in the case where the first material is aluminium oxide and the second material is air, the length threshold value $l_{p\_threshold}$ is generally comprised between 800 nm and 5 $\mu$m, preferably between 1 $\mu$m and 4 $\mu$m, even more preferably it is equal to about 3 $\mu$m. Furthermore, in the case where the first material is aluminium oxide and the second material is characterized by a second refractive index $n_2$ comprised between 1.4 and 1.6, the length threshold value is lp_threshold comprised between 6 $\mu$m and 12 $\mu$m, more preferably between 8 $\mu$m and 10 $\mu$m, even more preferably it is equal to about 9 $\mu$m.

The Applicant has also found, in some embodiments, that in the presence of nano-pore 30 structures in which the length $l_p$ of the nano-pores 31 is greater than the length threshold value $l_{p\_threshold}$, the chromatic effect is of a variable type, once the diameter $d_p$ of the nano-pores 31 exceeds a diameter threshold value $d_{p\_threshold}$. In particular, in the case where the first material is aluminium oxide and the second material is air, the diameter threshold value $d_{p\_threshold}$ is generally comprised between 50 nm and 120 nm, preferably between 60 nm and 100 nm, even more preferably it is equal to about 80 nm.

Furthermore, in the case where the first material is aluminium oxide and the second material is characterized by a second refractive index $n_2$ comprised between 1.4 and 1.6, the diameter threshold value $d_{p\_threshold}$ is generally comprised between 150 nm and 220 nm, preferably between 160 nm and 200 nm, even more preferably it is equal to about 180 nm.

The Applicant has also found that as the ratio $n_M/n_m$ between the higher refractive index $n_M$ and the lower refractive index $n_m$ of the refractive indexes $n_1, n_2$ of the first and second materials decreases, the threshold values of length $l_{p\_threshold}$, and of diameter $d_{p\_threshold}$ increase.

For example, Figs. 4 and 5 schematically show units 1b and 1c which respectively comprise a nano-pore 30 structure characterized by dimensional parameters falling within the ranges that lead to a variable chromatic diffusion effect, wherein Fig. 4 illustrates a unit 1b with a nano-pore 30 structure characterized by a surface density $D_p$ of the nano-pores 31 greater than the surface density $D_p$ of the nano-pores 31 of the nano-pore 30 structure of the unit 1c of Fig.5.

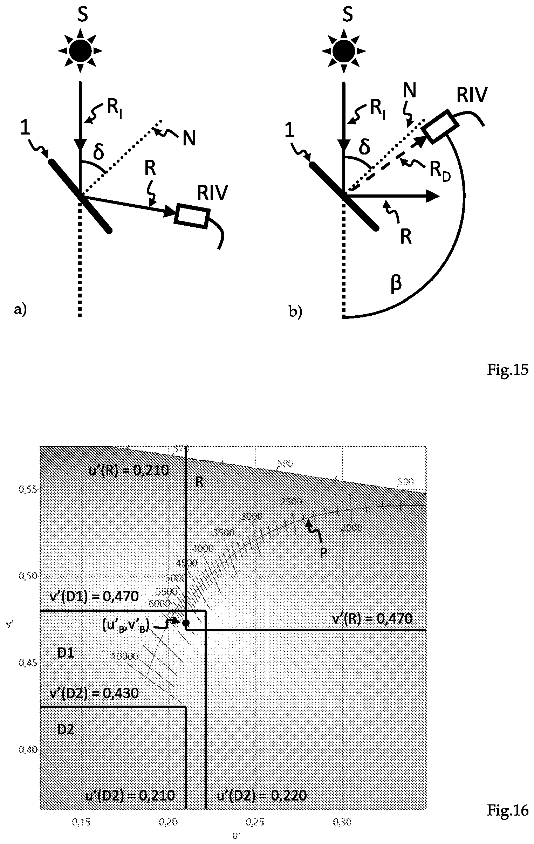

As regards the measurement of the dependence of the regular reflectance on the wavelength, one can proceed as illustrated in Fig. 15a. The unit 1,1a-1g is oriented such that its normal N (indicated by a dashed line in Fig. 15a) forms an angle $\delta$ with the incident ray $R_I$ emitted by a light source S with white light, for example a source having the spectrum of the standard illuminator CIE D65, and where the spectrum of the light reflected at the specular angle is measured by a detector (a spectrophotometer) RIV. This spectrum is thus normalized with respect to the emission spectrum of the source S, acquired for example by positioning the detector RIV on the path of the beam $R_I$ in the absence of the unit 1,1a-1g. In this way the dependence of the spectral reflectance of the unit 1,1a-1g on the wavelength is obtained without having to take into account the spectral characteristics of the source. Finally, a colour point is associated with the spectral profile of regular reflectance in the chromaticity diagram 1976 u'-v'. This point corresponds to the chromatic coordinate that would be obtained by measuring the regular reflective component if the unit 1,1a-1g were illuminated by a light source having the spectral characteristics of a standard illuminator CIE E. The measurement can be repeated for different angles $\delta$ comprised between 10° and 90°.

To evaluate the colour point associated with a direction of observation far from the direction of specular reflection, one can proceed as illustrated in Fig. 15b. The unit 1,1a-1g is oriented such that its normal N forms an angle $\delta$ with the incident ray $R_I$ emitted by a light source S with white light; through a detector (a spectrophotometer) RIV placed at an angle $\beta$ with respect to the incident ray $R_I$ the spectrum of diffused light $R_D$ is recorded, to which a colour point is associated in the chromaticity diagram 1976 u'-v' after normalization of the revealed spectrum, analogously to what is described with reference to the measurement of regular reflectance. The angle $\beta$ is chosen outside the light cone of the light reflected by the sample (e.g. $\beta$ = 150° for a sample comprising a nano-pore structure with pore directrix perpendicular to the reflective surface).

More generally, the spectrum of the light diffused by the unit 1,1a-1g is detected by positioning the detector outside the beam of light regularly reflected by the unit 1,1a-1g, and a first set of measurements is collected by fixing the inclination of the sample with respect to the direction of the incident beam $R_I$ and by detecting the spectrum of the diffused light at various angles $\beta$ at which the detector is placed. In particular, the acquired measurements are used to identify the pair of angles ($\delta$, $\beta$) that determines the point of maximum distance from the white point (having coordinates ($u'_B$ = 0.210; $v'_B$ = 0.474) in the example of Fig. 16).

On the basis of the colour points identified as described above, the nano-pore 30 structure of the unit 1,1a-1g is considered in accordance with one of the embodiments of the present invention if the following properties of the colour points derived by the spectral analysis of the beams that are regularly and diffusely reflected by the unit 1,1a-1g considered are verified. In particular, it is verified whether for a standard observer CIE 1931 (2°) the spectrum of the regularly reflected beam corresponds to colour points on the chromaticity diagram CIE 1976 u'-v' with chromaticity coordinates comprised in a region of acceptability of the corresponding colour point to the regular spectral reflectance R of the chromaticity diagram having coordinates u' > 0.210 and v' > 0.470 (illustrated in Fig. 16). Furthermore, it is verified whether the chromatic coordinates of the colour points of the regularly reflected beam are at a maximum Euclidean distance of less than 0.1 from the defined colour points and the curve defined by the colour points associated with the emission spectrum of a black body, or Planckian locus P, preferably 0.05, even more preferably 0.03. The maximum Euclidean distance $\Delta^R_{max}(u',v')$ between pairs of colour points of the regularly reflected beam among the plurality of colour points of the reflected beam regularly identified at different angles $\delta$ is determined. The maximum Euclidean distance $\Delta^R_{max}(u',v')$ is compared with a threshold value $\Delta^R_{threshold}(u',v')$, preferably $\Delta^R_{threshold}(u',v')$ = 0.02, to discriminate between an invariable or static chromatic diffusion characteristic of the unit 1,1a-1g, and a chromatically variable diffusion characteristic. In detail:

a. if $\Delta^R_{max}(u',v') \geq \Delta^R_{threshold}(u',v')$ the unit 1,1a-1g is chromatically variable;
b. if $\Delta^R_{max}(u',v') < \Delta^R_{threshold}(u',v')$ the unit 1,1a-1g is chromatically invariable or static.

Furthermore, in the case where $\Delta^R_{max}(u',v') \geq \Delta^R_{threshold}(u',v')$, then the point of maximum blue (defined as the colour point of the diffused light located at maximum distance from the previously defined white point) in the chromaticity diagram CIE 1976 u'-v' relative to the spectrum of diffused light is comprised in the portion of the plane having coordinates u'<0.220 and v'<0.480, indicated as the first region of acceptability D1 (illustrated in Fig. 16). Otherwise, in the case where $\Delta^R_{max}(u',v') < \Delta^R_{threshold}(u',v')$, then the point of maximum blue is comprised in the portion of the plane having coordinates u'<0.210 and v'<0.430, defined as the second region of acceptability D2 (illustrated in Fig. 16). Furthermore, the minimum Euclidean distance $\Delta^{RD}_{min}$ in the chromaticity diagram CIE 1976 u'-v' between the colour point of maximum blue associated with the diffused light spectrum and the colour point closest thereto among the colour points associated with the reflected light spectrum must be greater than or equal to 0.02, more preferably greater than or equal to 0.03, even more preferably greater than or equal to 0.04. Therefore, it is not possible to obtain a sample such that the colour point of maximum blue associated with the diffused light spectrum and the colour points associated with the reflected light spectrum are within the overlap region between the region of acceptability of the reflection R and the first region of acceptability D1.

The Applicant has also identified, in some embodiments, that in the presence of nano-pore 30 structures in which the length $l_p$ of the nano-pores 31 is greater than a second length threshold value $l_{p\_threshold\_2}$ and in any case less than 200 $\mu$m, preferably less than 100 $\mu$m, the chromatic diffusion effect of the incident light is static or variable.

In particular, in the case where the first material is aluminium oxide and the second material is air, the second length threshold value $l_{p\_threshold\_2}$ is generally comprised between 300 nm and 2 $\mu$m, preferably between 1 $\mu$m and 1.7 $\mu$m, even more preferably it is equal to about 1.4 $\mu$m.

Furthermore, in the case where the first material is aluminium oxide and the second material is characterized by a second refractive index $n_2$ comprised between 1.4 and 1.6, the length threshold value is $l_{p\_threshold\_2}$ is comprised between 4 $\mu$m and 8 $\mu$m, more preferably between 5 $\mu$m and 7 $\mu$m, even more preferably it is equal to about 6 $\mu$m.

The Applicant has also found, in some embodiments, that in the presence of nano-pore 30 structures in which the length $l_p$ of the nano-pores 31 is greater than the second length threshold value $l_{p\_threshold\_2}$, the chromatic effect is static or variable, once the diameter $d_p$ of the nano-pores 31 exceeds a second diameter threshold value $d_{p\_threshold\_2}$. In particular, in the case where the first material is aluminium oxide and the second material is air, the second diameter threshold value $d_{p\_threshold\_2}$ is generally comprised between 40 nm and 100 nm, preferably between 60 nm and 80 nm, even more preferably it is equal to about 70 nm.

Furthermore, in the case where the first material is aluminium oxide and the second material is characterized by a second refractive index $n_2$ comprised between 1.4 and 1.6, the second diameter threshold value $d_{p\_threshold\_2}$ is generally comprised between 150 nm and 190 nm, preferably between 160 nm and 180 nm, even more preferably it is equal to about 170 nm.

The Applicant has also found that as the ratio $n_M/n_m$ between the higher refractive index $n_M$ and the lower refractive index $n_m$ of the refractive indexes $n_1, n_2$ of the first and second materials decreases, the second threshold values of length $l_{p\_threshold\_2}$, and of diameter $d_{p\_threshold\_2}$ increase.

Below is a series of exemplary examples relating to various samples of nano-pore structures analysed.

*Example 1 according to the invention - Static chromatic diffusion sample*

Sample A with nano-pore structure obtained by anodizing an aluminium substrate (alloy 1050) in 0.1 M phosphoric acid at 20°C at a potential of 80 V for an anodizing time equal to 60 minutes. The nano-pore structure has a length $l_p$ of 1.5 $\mu$m, the pores have a diameter $d_p$ of 85 nm and an inter-pore distance $I_p$ of 185 nm thus equal to 2.2 times the diameter $d_p$. Sample A therefore has a porosity of about 21%. The analysis of sample A allows determining the coordinates of the colour points shown in the following Table 1.

**Table 1: salient colour points for sample A**

|  | u' | v' | Planckian distance |
|---|---|---|---|
| 10° | 0.2227 | 0.5012 | 0.0015 |
| 50° | 0.2339 | 0.5063 | 0.0028 |
| Blue 50-150 | 0.1772 | 0.3849 | 0.0066 |

The maximum Euclidean distance $\Delta^R_{max}(u',v')$ is equal to 0.012 ($\Delta^R_{max}(u',v') = 0.012$), less than the threshold value $\Delta^R_{threshold}(u',v')$. Consequently, the sample A considered is chromatically static. The point of best blue is within the second region of acceptability D2 and the minimum distance between the point of best blue and the points relative to the spectrum of regularly reflected light is $\Delta^{RD}_{min} = 0.125$ (acceptable). The dichroic reflectance ratio r evaluated by tilting the sample by an inclination angle $\delta$ first equal to 10° and then equal to 50° according to the configuration shown in Fig. 15a, shows an increase by about 50%. In other words, the sample A is representative of a unit according to the present invention characterized by a diffuse reflectance of the static type.

*Example 2 according to the invention - Sample with variable chromatic diffusion*

Sample B with nano-pore structure obtained by anodizing an aluminium substrate (alloy 1050) in 0.1 M phosphoric acid at 40° C at a potential of 80 V for an anodizing time equal to 60 minutes. The nano-pore structure has a length $l_p$ of 8.5 $\mu$m, the pores have a diameter $d_p$ of 160 nm and an inter-pore distance $l_p$ of 190 nm thus equal to 1.2 times the diameter $d_p$. Sample B therefore has a porosity of about 50%. The analysis of sample B allows determining the coordinates of the colour points shown in the following Table 2.

**Table 2: salient colour points for sample B**

|  | u' | v' | Planckian distance |
|---|---|---|---|
| 10° | 0.2436 | 0.5212 | 0.0035 |
| 50° | 0.2932 | 0.5391 | 0.0024 |
| Blue 50-150 | 0.1916 | 0.449 | 0.0015 |

The maximum Euclidean distance $\Delta^R{}_{max}(u',v')$ is equal to 0.053 ($\Delta^R{}_{max}(u',v') = 0.053$), greater than the threshold value $\Delta^R{}_{threshold}(u',v')$. The colour points of the reflection are in the area of acceptability R and the point of best blue is within the first region of acceptability D1 and the minimum distance between the point of best blue and the points relative to the spectrum of regularly reflected light is $\Delta^{RD}{}_{min}$ = 0.089 (acceptable). Consequently, the sample B considered is chromatically variable. In other words, the sample B is representative of a unit according to the present invention characterized by a regular/diffuse reflectance of variable type.

*Example 3 according to the invention - Static chromatic diffusion sample*

Sample $B_2$ with nano-pore structure obtained by anodizing an aluminium substrate (purity 99.99%) in 0.8 M phosphoric acid at 30° C at a potential of 80 V for an anodizing time equal to 30 minutes. The nano-pore structure has a length $l_p$ of 8.6 $\mu$m, the pores have a diameter $d_p$ comprised between 140-160 nm and an inter-pore distance $l_p$ comprised between 160-190 nm thus equal to 1.2 times the diameter $d_p$. Sample $B_2$ therefore has a porosity of about 50%. The nano-pore structure of sample $B_2$ is completely immersed in a resin based on soluble fluoropolymers having a refractive index equal to $n_2$=1.48. The analysis of sample $B_2$ allows determining the coordinates of the colour points shown in the following Table 2bis.

**Table 2bis: salient colour points for sample $B_2$**

|  | u' | v' | Planckian distance |
|---|---|---|---|
| 10° | 0.2296 | 0.5074 | 0.0091 |
| 50° | 0.2367 | 0.5172 | 0.0135 |
| Blue 50-150 | 0.1814 | 0.4082 | 0.0023 |

The maximum Euclidean distance $\Delta^R{}_{max}(u',v')$ is equal to 0.0092 ($\Delta^R{}_{max}(u',v') = 0.0092$), less than the threshold value $\Delta^R{}_{threshold}(u',v')$. Consequently, the sample A considered is chromatically static. The point of best blue is within the second region of acceptability D2 and the minimum distance between the point of best blue and the points relative to the spectrum of regularly reflected light is $\Delta^{RD}{}_{min}$ = 0.1165 (acceptable). The dichroic reflectance ratio r evaluated by tilting the sample by an inclination angle $\delta$ first equal to 10° and then equal to 50° according to the configuration shown in Fig. 15a, shows an increase by about 29%. In other words, the sample $B_2$ is representative of a unit according to the present invention characterized by a diffuse reflectance of the static type. It is highlighted how the chromatically static sample $B_2$ has a geometry substantially comparable to that of the chromatically variable sample B according to example 2. The different behaviour of the two samples is therefore attributable to the different (lower) ratio between the first refractive index $n1$ of the nano-pore structure (higher refractive index $n_M$) and the second refractive index $n2$ of the material that fills the nano-pore structure (lower refractive index $n_m$), with the consequent raising of the threshold values of diameter $d_{p\_threshold}$ and of length $l_{p\_threshold}$ beyond which the sample is characterized by a diffuse reflectance of the variable type.

*Comparative example 1 - sample with nano-pores with insufficient diameter*

Sample C with nano-pore structure in an aluminium oxide layer grown on aluminium. The nano-pore structure has a length $l_p$ of 30 $\mu$m, the pores have a diameter $d_p$ of 25 nm and an inter-pore distance $l_p$ of 65 nm thus equal to 2.6 times the diameter $d_p$. Sample C therefore has a porosity of about 14%. The analysis of sample C allows determining the coordinates of the colour points shown in the following Table 3 (where the value(s) marked with an asterisk symbol identify an unacceptable parameter).

**Table 3: salient colour points for sample C**

|  | u' | v' | Planckian distance |
|---|---|---|---|
| 10° | 0.2125 | 0.4781 | 0.0087 |
| 50° | 0.2142 | 0.4791 | 0.0092 |
| Blue 50-150 | 0.1965 | 0.4344 (*) | 0.011 |

The maximum Euclidean distance $\Delta^R_{max}(u',v')$ is equal to 0.002 ($\Delta^R_{max}(u',v') = 0.002$), less than the threshold value $\Delta^R_{threshold}(u',v')$. Consequently, the sample C considered is not characterized by chromatic variability. Furthermore, the point of best blue is outside the second region of acceptability D2. In other words, sample C is not representative of a unit according to the present invention, since the diameter $d_p$ of the nano-pores of the nano-pore structure does not allow to obtain the desired diffuse reflectance characteristics.

The comparison of the samples A and B of the examples 1 and 2 according to the invention with the sample C described in the comparative example 1, shows how the variation of the diameter $d_p$ of the nano-pores (therefore also of the porosity $P_p$ of the structure) allows controlling the chromatic characteristics of the unit.

*Comparative example 2 - Inadequate pore density and porosity*

Sample D with nano-pore structure in an aluminium oxide layer grown on aluminium. The nano-pore structure of sample D has the following characteristics: pore diameter $d_p$ 40 nm, length $l_p$ 30 $\mu$m and inter-pore distance $l_p$ of 125 nm, thus equal to 3.1 times the diameter $d_p$. Sample D therefore has a porosity of about 10%. The analysis of sample D allows determining the coordinates of the colour points shown in the following Table 4 (where the value(s) marked with an asterisk symbol identify an unacceptable parameter).

**Table 4: salient colour points for sample D**

| **125-40-30** | u' | v' | Planckian distance |
|---|---|---|---|
| 10° | 0.219 | 0.493 | 0.0035 |
| 50° | 0.215 | 0.484 | 0.0059 |
| Blue 50-150 | 0.195 | 0.435 (*) | 0.0044 |

The maximum Euclidean distance $\Delta^R_{max}(u',v')$ is equal to 0.009 ($\Delta^R_{max}(u',v') = 0.009$), less than the threshold value $\Delta^R_{threshold}(u',v')$; consequently sample D is chromatically static. Furthermore, the point of maximum blue for sample D is outside the second region of acceptability D2. Therefore, sample D does not represent a unit according to the present invention since the density of the nano-pores of the nano-pore structure is higher than a maximum density which allows obtaining the desired diffuse reflectance characteristics.

*Comparative example 3 - insufficient nano-pore length*

Sample E with nano-pore structure obtained by anodizing an aluminium substrate (alloy 1050) in 0.1 M phosphoric acid at room temperature at a potential of 80 V for an anodizing time of 60 seconds. The nano-pore structure of sample E has the following characteristics: pore diameter $d_p$ 80 nm, length $l_p$ 150 nm and inter-pore distance $l_p$ 185 nm, thus equal to 2.3 times the diameter $d_p$. Sample E therefore has a porosity of about 18%. The analysis of sample E allows determining the coordinates of the colour points shown in the following Table 5 (where the value(s) marked with an asterisk symbol identify an unacceptable parameter).

**Table 5: salient colour points for sample E**

|  | u' | v' | Planckian distance |
|---|---|---|---|
| 10° | 0.206 (*) | 0.469 (*) | 0.0072 |
| 50° | 0.207 (*) | 0.469 (*) | 0.0079 |
| Blue 50-150 | 0.223 (*) | 0.476 (*) | 0.0154 |

The maximum Euclidean distance $\Delta^R_{max}(u',v')$ is equal to 0.001 ($\Delta^R_{max}(u',v') = 0.001$), less than the threshold value $\Delta^R_{threshold}(u',v')$. Consequently, the sample E considered is chromatically static. Furthermore, the point of best blue is outside the second region of acceptability D2. In other words, sample E does not represent a unit according to the present invention, since the length of the nano-pores of the nano-pore structure is less than a minimum length which allows obtaining the desired diffuse reflectance characteristics.

By comparing the samples A and B of the examples according to the invention with the samples D and E of the comparative examples, it is clear that the variation of the length $l_p$ of the nano-pores, of the density $D_p$ of the nano-pores 31 (therefore also of the porosity $P_p$) of the structure allows controlling the chromatic properties of the unit 1,1a-1g according to the present invention.

The Applicant has also found that by varying two or more of these parameters and the diameter $d_p$ of the nano-pores, a synergistic effect is obtained which determines the variation of the correlated colour temperature of a beam of light reflected by the unit 1,1a-1g as the angle of incidence of the light beam incident on it varies. Consequently, it is possible to determine different combinations of values of the dimension of the diameter $d_p$, of the length $l_p$ and of the density $D_p$ of the nano-pores 31, as well as of $P_p$ of the structure in order to obtain the same desired chromatic effect, in terms of correlated colour temperature of regularly reflected and diffused light.

Furthermore, the Applicant has determined that, by selecting different materials in which to immerse the nano-pore 30 structure, it is possible to obtain a ratio between the refractive indexes $n_2$ and $n_1$ (comprised between 1.05 and 3) suitable for influencing the diffuse reflectance and the regular reflectance of the chromatic diffusion layer 20 and, therefore, the correlated colour temperature of a beam of light regularly reflected by the unit 1,1a-1g.

*Nano-Structure Growth Process*

The Applicant has identified a growth process 100, schematically illustrated in Fig. 18, which allows controlling the parameters of the nano-structure 30 included in the chromatic diffusion layer 20 in a particularly effective way.

Initially, a substrate is selected on which to grow the chromatic diffusion layer (block 101). In the example considered, an aluminium alloy plate 1050 is selected as the growth substrate for the chromatic diffusion layer. Advantageously, although not limiting, this substrate can be used as a reflective layer 10 of the unit 1,1a-1g.

The substrate is then subjected to brightening or polishing, for example electropolishing, in order to eliminate a layer of native aluminium oxide that covers the substrate and, possibly, reduce a surface roughness of the substrate (block 103). For example, electropolishing is performed by immersing the substrate in a mixture of ethanol ($CH_3CH_2OH$) and perchloric acid ($HClO_4$) in a 4:1 ratio and then by applying an electrical potential difference $\Delta V_p$ comprised between 5 V and 30 V between the growth substrate and a cathode made of graphite or aluminium for a time interval $\Delta t_p$ comprised between 1 and 60 minutes.

In one embodiment of the present invention, electropolishing is performed so that the surface of the growth substrate is substantially reflective - i.e. a 'mirror' polishing is obtained - eliminating the texture inherited from the production processes and the growth substrate can be used as the reflective layer 10 of the unit 1,1a-1g.

After electropolishing, the substrate is subjected to anodization (block 105). For example, the substrate is immersed in an electrolyte substantially consisting of a solution of phosphoric acid with molarity 0.1 M, and a voltage is applied by applying an electric potential difference $\Delta V_a$ comprised between 70 V and 110V, preferably comprised between 80 V and 100 V, between the growth substrate and a cathode made of graphite or aluminium for a time interval $\Delta t_a$ comprised between 30 minutes and 120 minutes, preferably 60 minutes. Furthermore, during the anodization a temperature $T_a$ comprised between -10° C and 50° C, preferably, selected between 20° C and 40°C, is maintained.

The Applicant has identified that it is possible to control an average diameter of the nano-pores 31 by adjusting the values of electric potential $\Delta V_a$ and temperature $T_a$. In particular, as the values of electric potential $\Delta V_a$ and temperature $T_a$ increase, it is possible to increase an average pore diameter while maintaining the anodization time interval $\Delta t_a$ constant as indicated in the Table 6 shown below:

**Table 6**

| Electric potential $\Delta V_a$ (V) | Temperature $T_a$ (°C) | Average diameter of the nano-pores (nm) |
|---|---|---|
| 80 | 20 | 76-86 |
| 80 | 30 | 95-105 |
| 80 | 40 | 153-163 |
| 90 | 20 | 80-90 |
| 90 | 30 | 95-125 |
| 90 | 40 | 175-185 |

Furthermore, the Applicant has observed that it is possible to control the thickness of the chromatic diffusion layer 20 for the same anodization time interval $\Delta t_a$ by adjusting the temperature $T_a$; in particular, the thickness of the chromatic diffusion layer 20 increases as the temperature $T_a$ increases, maintaining the anodization time interval $\Delta t_a$ constant.

Last but not least, the Applicant has identified that it is possible to control the inter-pore distance *Ip* through a preventive *patterning* step of the substrate on which to grow the chromatic diffusion layer. This preventive step provides a growth imprint for the pore position of the nano-pore 30 structure. By controlling the diameter $d_p$ and the inter-pore distance *Ip* it is also possible to set the porosity $P_p$ of the structure 30.

At the end of the anodization, on the substrate there is a chromatic diffusion layer 20 comprising a nano-pore 30 (or a nano-pillar 70) structure with the desired characteristics. Subsequently, the substrate with the chromatic diffusion layer 20 is washed and dried - for example, in a convection oven - in order to remove any foreign bodies present in the nano-pores 31 of the nano-pore 30 structure (block 107).

Optionally, the nano-pore 30 structure (or the nano-pillar 70 structure) is immersed in a resin. To this end, a resin layer is initially applied to the substrate with the nanostructure 30,70. The nanostructured substrate with the applied resin can be treated in an environment where vacuum is created; in this way it is guaranteed that the resin penetrates inside the structure 30,70 before solidifying. The nanostructured substrate with the applied resin is then treated according to the appropriate polymerization procedures provided for the specific resin.

Optionally, the chromatic diffusion layer 20 is separated from the substrate (block 109) to be coupled with a desired reflective layer 10 (block 111).

*Coating element*

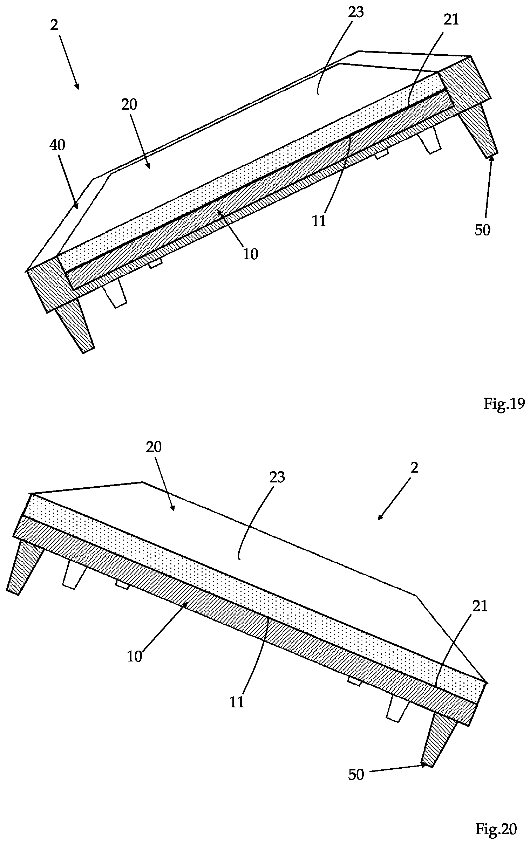

According to embodiments of the present invention, illustrated in Figs. 19 and 20, the unit 1,1a-1g described is used for the production of a surface coating element, referred to below as element 2 for the sake of brevity. In particular, the element 2 is suitable for coating building surfaces, for example the external facades of buildings.

The element 2 comprises a support structure 40, one or more coupling means 50 and at least one unit 1,1a-1g. In particular, the support structure 40 is configured to mechanically support the unit 1,1a-1g, so that the second surface 23 of the chromatic diffusion layer 20 faces the external environment, when the support is mounted on a surface to be coated.

In the example of Fig. 19, the support structure 40 is configured to surround the perimeter of the unit 1,1a-1g by means of a frame 1. However, in other embodiments (not shown) the support structure 40 may be frameless or comprise a partial frame - for example, with frame edges configured to approach opposite or adjacent sides of the unit 1,1a-1g.

As illustrated in the example of Fig. 20, the support structure 40 can be integrated or made as a single piece with the reflective layer 10. In this way, the element 2 is particularly compact and more economical to make. Furthermore, the absence of a frame allows several elements 2 to be approached so as to create a chromatic effect light reflective surface of desired width and substantially without interruption.

The coupling means 50 develop from the support structure 40 in the opposite direction with respect to the unit 1,1a-1g and are configured to allow a mechanical coupling of the support structure 40 to the surface to be coated. For example, the coupling means 50 comprise one or more brackets provided with holes for receiving fixing elements such as screws and/or bolts which are fixed to the surface to be coated or to a bearing structure - such as a structure comprising one or more uprights - arranged in proximity or in contact with the surface to be coated. In addition or alternatively, the coupling means 50 comprise fixing elements by interlocking or by interference suitable for coupling mechanically to corresponding fixing elements provided on the surface to be coated or on the afore-mentioned bearing structure. As will be evident to the skilled person, the coupling means 50 can be made in a single piece with the support structure 40 or can be coupled thereto at a later time, in a removable or nonremovable way.

The invention thus conceived is susceptible to several modifications and variations, all falling within the scope of the inventive concept. For example, in an alternative embodiment - illustrated in Fig. 21 - the unit 1d comprises an intermediate layer 60 interposed between the reflective layer 10 and the chromatic diffusion layer 20. In particular, the intermediate layer 60 is at least partially non-absorbent or transparent to electromagnetic radiations with wavelength included in the visible spectrum - for example, the intermediate layer 60 can be made of a material such as silicon oxide, borosilicate glass, etc.

In embodiments of the present invention - of which an example is shown in Fig. 22 - the chromatic diffusion substrate 20 of the unit 1e comprises a nano-pillar 70 structure instead of the nano-pore 30 structure described above. In this case, the nano-pillar 70 structure has characteristics similar to the characteristics of the nano-pore 30 structure described above. In particular, the nano-pillars 71 are characterized by length $l_p'$, diameter $d_p'$, directional order parameter S', surface density $D_p'$, porosity $P_p'$ and periodicity substantially corresponding to what is indicated above for nano-pores 31.

Similarly to what has been described above, the nano-pillar 70 structure can be immersed in a material selected to control the ratio between the refractive index $n_2$ of the material surrounding the nano-pillars 71 - for example, air - and the refractive index $n_1$ of the material of the nano-pillar 70 structure - for example, aluminium oxide.

The Applicant has found that for the nano-pillar structures 70 it is possible to observe relations similar to those described with reference to the nano-pore 30 structures which link the single geometric parameters to the chromatic effects of the static type and of the variable type described above.

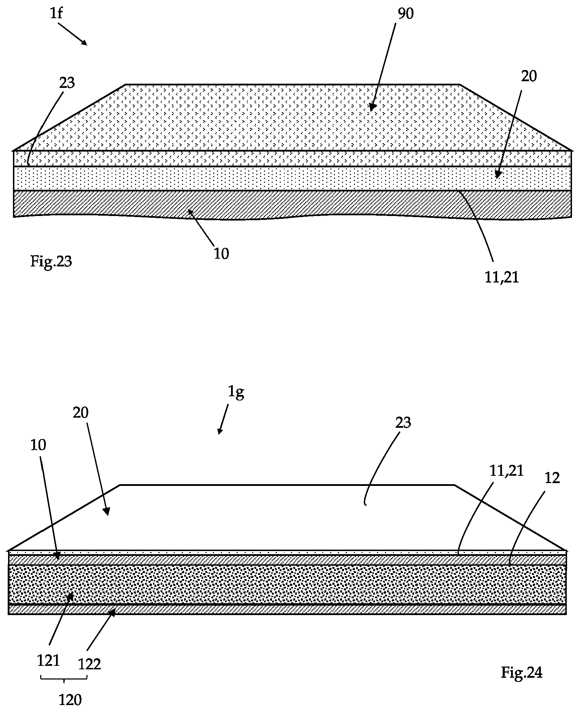

In an alternative embodiment illustrated in Fig. 23, the unit 1f additionally comprises a coating layer 90, placed at the second surface 23 of the chromatic diffusion layer 20. In particular, the coating layer 90 is at least partially non-absorbent or transparent to electromagnetic radiations with wavelength included in the visible spectrum - for example, the coating layer 90 can be made of a material such as silicon oxide, borosilicate glass, etc.

In case the coating layer 90 fills at least partially the nano-pore 30 structure or the nano-pillar 70 structure is at least partially immersed in the coating layer 90, this layer 90 is preferably made with a polymer, a resin, a silicone, a different oxide (for example deposited by sol-gel) transparent or substantially non-absorbent at least to electromagnetic radiations with wavelength included in the visible light spectrum, with a third refractive index $n_3$ comprised between 1.3 and 1.55, preferably between 1.41 and 1.52, for example polyvinyl chloride (PVC), polymethyl methacrylate (PMMA), polyfluorides (such as, PVDF) or transparent polyacrylates. In particular, the coating layer 90 is made with a resin based on soluble fluoropolymers, in particular a polyurethane resin with a high fluorocarbon content, for example the resin known on the market under the trade name Lumiflon®. In particular, the fluoropolymer-based resin is selected with a refractive index $n_2$ comprised between 1.45 and 1.50, more preferably equal to 1.48. Also with reference to the coating layer 90, the ratio ($n_1/n_3$) between the first ($n1$) and the third ($n3$) refractive index is comprised between 1.05 and 3.

In an alternative embodiment illustrated in Fig. 24, the reflective layer 10 of the unit 1g comprises a rear surface 12 opposite its reflective surface 11 to which a stiffening composite layer 120 is coupled. The stiffening composite layer 120 comprises a shimming panel 121 and a coating sheet 122. In particular, the shimming panel 121 has a specific weight at least 5 times less than the specific weight of the coating sheet 122, preferably at least 10 times less than the specific weight of the coating sheet 122. Furthermore, the shimming panel 121 has a thickness at least 2 times higher than the thickness of the coating sheet 122, preferably at least 5 times higher than the thickness of the coating sheet 122. In particular, the coating sheet 122 is made of aluminium and has a thickness comprised between 0.2 mm to 1 mm, preferably equal to about 0.5 mm.

In preferred embodiments, the shimming panel 121 is made of a non-combustible material, such as fiberglass, expanded glass granulate, rock fibre, cellular glass, ceramic fibre, carbon fibre, vermiculite (expanded or not), expanded clay or perlite (expanded or not).

In alternative embodiments, the shimming panel 121 is made in the form of a grating, such as for example a honeycomb grating with axis of the cells that is orthogonal to the reflective layer, or has a wavy profile according to a section orthogonal to the reflective layer.

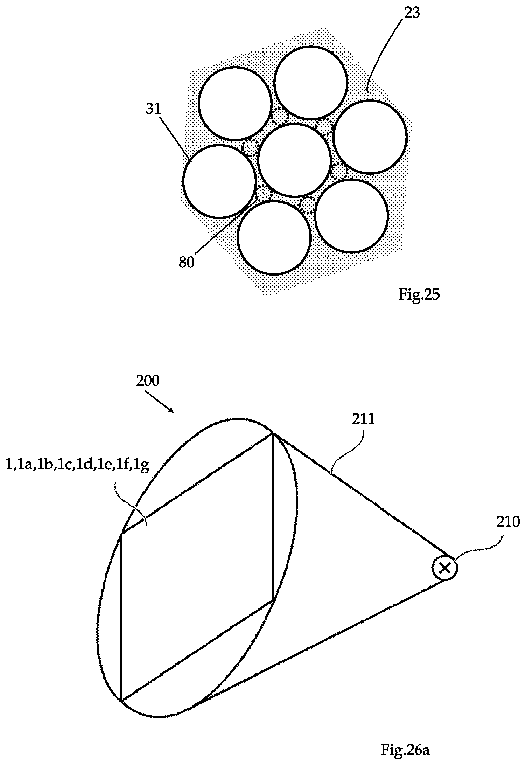

Furthermore, it is possible to realize a nano-pore 30 structure with nano-pores configured such to delimit a portion of the structure 80 which inscribes a circumference with diameter comprised between 30 nm and 300 nm, as schematically illustrated in Fig. 25. In this case, the nano-pore structure has a behaviour corresponding to a nano-pillar structure of corresponding diameter. In a dual way, it is possible to realize a nano-pillar structure with nano-pillars configured in such a way as to delimit an interspace that inscribes a circumference with diameter comprised between 30 nm and 300 nm. In this case, the nano-pore structure has a behaviour corresponding to a nano-pore structure of corresponding diameter.

In alternative embodiments (not shown), the chromatic effect light reflective unit may comprise a nano-pore or nano-pillar structure having a distribution other than the hexagonal distribution, such as for example a square, rectangular, octagonal distribution and so on.

In alternative embodiments (not shown), the chromatic effect light reflective unit can define a curved surface and/or define edges, convexity and/or concavity. Correspondingly, the coating element which comprises such a chromatic effect light unit has corresponding curved surfaces and/or edges, convexity and/or concavity. This coating element is therefore suitable for coating non-flat surfaces, corner elements - for example of a building - and, more generally, it can be used to define non-flat surfaces in order to obtain a desired aesthetic effect.

Furthermore, there is nothing to prevent the provision of coupling elements at perimeter edges of the coating unit so as to allow a mechanical coupling among a plurality of coating elements.

Finally, the materials used, as well as the contingent shapes and sizes, can be whatever according to the requirements without for this reason departing from the scope of protection of the following claims.

In particular, alternative embodiments of the chromatic effect light reflective unit provide a chromatic diffusion layer in a material other than aluminium oxide, non-absorbent or transparent to electromagnetic radiations with wavelength included in the visible spectrum in a similar way to aluminium oxide.

In fact, other types of metal oxides can be used to make the chromatic diffusion layer. For example, in alternative embodiments of the present invention, the nano-pore or nano-pillar structure of the layer is made of titanium oxide, or titania ($TiO_2$), preferably anodic titanium oxide (acronym ATO). Alternatively, the nano-pore structure or, more preferably, the nano-pillar structure can be made of zinc oxide (ZnO).

Furthermore, there is nothing to prevent the definition of the diameter $d_p$ of each nano-pore 31 or nano-pillar 71 as an average value of the diameters of the circumferences that inscribe the nano-pore 31 or nano-pillar 71, calculated at a plurality of predefined distances from the first surface 21 of the chromatic diffusion layer 20 along the development direction of the nano-pore 31 or nano-pillar 71 considered.

Furthermore, a three-dimensional order parameter can be calculated to characterize the main development direction of the nano-pores 31 or nano-pillars 71.

In an alternative embodiment illustrated in Fig. 26, the chromatic effect reflective unit 1,1a-1g is used in an illumination system 200 comprising an illuminator 210 to illuminate the reflective unit 1,1a -1g. The illuminator 210 is, for example, a light source of white light. In a particular embodiment, the white light source has CCT> 5000K, preferably CCT>5500K, more preferably CCT> 6000K. The illuminator 210 of Fig. 26 emits or projects light on the unit 1,1a-1g. In Fig. 26 there is shown by way of example a light cone 211 of the light emitted by the illuminator 210 which completely covers and substantially corresponds to the extension of the unit 1,1a-1g. In the embodiment of Fig. 26, the chromatic effect reflective unit 1,1a-1g has a substantially planar surface, specifically the chromatic effect reflective unit 1,1a-1g has a surface conforming to a rectangle having a first side greater than a second side, for example a first side 2 times, preferably 3 times, more preferably 4 times greater than a second side.

In a particular embodiment (not shown), the illuminator 210 is a linear illuminator comprising a plurality of LED sources and a plurality of collimators, each collimator of the plurality of collimators being coupled to each LED source of the plurality of LED sources, such collimator being arranged along a direction parallel to the first side of the rectangle-shaped unit 1,1a-1g.

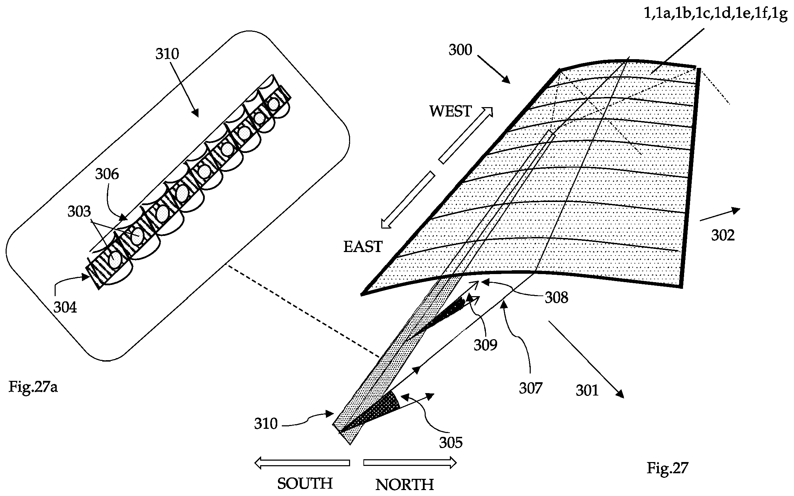

In an alternative embodiment illustrated in Fig. 27, a different illumination system 300 is shown which differs from the illumination system of Fig. 26 in that it comprises a reflective unit 1,1a-1g which has substantially conformation of a parabolic cylindrical reflector, hereinafter also "parabolic cylindrical unit", and a linear illuminator 310 arranged along a direction parallel to a focal axis of the parabolic cylindrical unit 1,1a-1g. In a particular configuration, the linear illuminator 310 is arranged in a position proximal to the focal axis of the parabolic cylindrical unit 1,1a-1g. In a different configuration, the linear illuminator 310 is arranged in a position such that the light produced by the illuminator 310 illuminates the parabolic cylindrical unit 1,1a-1g as if the rays produced by the illuminator 310 emerged from a region of the space proximal to the focal axis of the parabolic cylindrical unit 1,1a-1g. The illuminator 310 in turn comprises a plurality of light sources 303, for example LED sources. In a particular embodiment, the LED sources emit white light having CCT>5000K, preferably CCT>5500K, more preferably CCT >6000K. The illuminator 310 of Fig. 27a also comprises, optionally, a cylindrical collimator 304, for example an extruded cylindrical lens, capable of collimating the light produced by the light sources 303 in the plane orthogonal to the focal axis of the parabolic cylindrical unit 1,1a-1g, giving it a first angular luminance profile (a) such that the parabolic cylindrical unit 1,1a-1g is substantially all illuminated, for example it is uniformly illuminated, and/or (b) having a peak with a first width at half maximum (HWHM) defining a semi-divergence 305 of the first angular luminance profile or a first semi-divergence 305.

The linear illuminator 310 further preferably comprises a plurality of source collimators 306, wherein each source collimator 306 is coupled to a light source 303. The source collimators 306 are for example of the radially symmetrical type, or astigmatic or cylindrical and are positioned and configured to give each light source 303 of the plurality of light sources a second angular luminance profile in a plane 307 containing the focal axis of the parabolic cylindrical unit 1,1a-1g and passing through the centre line axis that divides the parabolic cylindrical unit 1,1a-1g into two parabolic cylindrical sectors of substantially equal area. The second angular luminance profile is characterized by a maximum value for a peak direction 308 substantially common to all light sources 303 and having a peak with a second width at half maximum (HWHM) defining a semi-divergence 309 of the second angular luminance profile or second half-divergence 309. In a particular embodiment of the present invention, the second half-divergence is significantly less than the first half-divergence, for example 3 times, preferably 6 times, more preferably 10 times lower, or the second half-divergence is equal for example to no more than 15°, preferably no more than 10°, more preferably no more than 5°.

In a different embodiment of the present invention, the source collimators 306 are configured to produce a second half-divergence 309 substantially equal to the value of the half-divergence associated with the angular luminance profile of the beam reflected by the parabolic cylindrical unit 1,1a-1g and measured in the plane orthogonal to the focal axis, where this divergence depends, among other things, on the dimensions of the linear illuminator 310 and on its distance from the focal axis.

In a further configuration of the present invention, the illumination system 300 comprises a redirection system (not shown) of the light produced by the linear illuminator, for example an electro-mechanical type device, capable of acting on the second angular luminance profile and of modifying a peak direction 308 in the plane 307, for example of modifying it in a neighbourhood of the direction perpendicular to the focal axis. In a particular embodiment, the redirection system operates by translating along the direction of the focal axis the position of the centres of the LED sources 303 with respect to those of the centres of the source collimators 306.

In a different configuration (not shown), the linear illuminator 310 comprises a plurality of mini-reflectors, each mini-reflector being coupled to each light source 303 of the illuminator 310, where the mini-reflectors are for example rotated along an axis perpendicular to a plane containing the focal axis and the peak direction 308.

The light reflected by the parabolic cylindrical unit 1,1a-1g has a third angular luminance profile in a plane perpendicular to the focal axis, this profile being substantially independent, net of edge effects, of the position along the direction of the focal axis. The third angular luminance profile has a peak which identifies a direction 301 in a plane orthogonal to the focal axis. The light reflected by the parabolic cylindrical unit 1,1a-1g finally has a fourth angular luminance profile in a plane parallel to the focal axis that contains the direction 309, where the fourth angular luminance profile has a peak that defines a direction 302 in that plane. As the peak direction 308 of the second angular profile varies as a result of the redirection system, the peak direction 302 of the fourth angular luminance profile varies correspondingly. In fact, the peak directions of the second 308 and the fourth 302 angular luminance profile are necessarily characterized by having the same projection in the plane orthogonal to the direction 301.

Assuming that the observer is positioned with the right-left axis directed parallel to the focal axis, and having the cardinal direction of WEST to his right, the image of the sun will run through the skylight passing from EAST, to SOUTH up to WEST as the direction 308 varies. Thanks to the fact that the luminance profile of the reflected light, and in particular the third and fourth luminance profile, do not depend on the position of the observer, since these profiles are spatially uniform, he perceives the image of the sun at an infinite distance. In fact, if the observer walks along the direction of the focal axis, the image of the sun follows him precisely.

If the parabolic cylindrical unit 1,1a-1g is a chromatic diffusion unit of a variable type, the variation in the position of the sun as perceived on the horizon will also be combined with a variation in the colour of the light of the sun itself, this colour being colder when the direction of the light emitted by the linear illuminator 310 forms the minimum angle with respect to the normal to the surface of the parabolic cylindrical unit 1,1a-1g, i.e. when the light reflected by the parabolic cylindrical unit 1,1a-1g has direction perpendicular to the focal axis, and therefore the observer perceives the sun at the maximum height above the horizon, and specifically in the SOUTH direction, and being warmer when the direction of the light emitted by the linear illuminator 310 forms the maximum angle with respect to the normal to the surface of the parabolic cylindrical unit 1,1a-1g, i.e. when the light reflected by the parabolic cylindrical unit 1,1a-1g deviates maximally from the normal to the focal axis, and therefore the observer perceives the sun at the maximum minimum height above the horizon, and specifically in the EAST direction or in the WEST direction.

As illustrated, the illumination system 300 is capable of producing a variation in the colour of the sunlight with the height of the sun above the horizon similar to that produced in nature. In nature, the effect is due to the variation in the length of the optical path of the sun rays in the atmosphere associated with the variation of the angle of incidence of the rays on the layer of air that constitutes the sky. In the case of the present invention, it is likewise due to the variation of the angle of incidence of the light produced by the linear illuminator 310 with respect to the direction along which the nano pores or nano pillars are oriented inside the parabolic cylindrical unit 1,1a-1g.

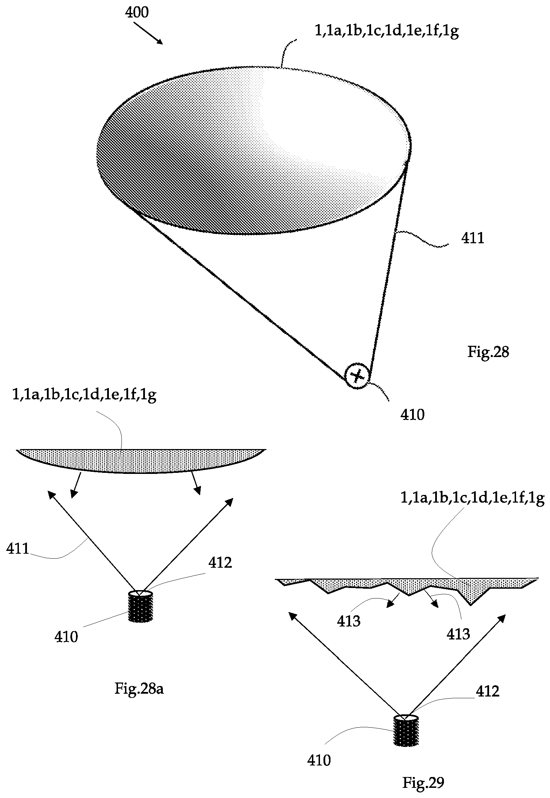

In an alternative embodiment, illustrated in Figs. 28 and 28a, the chromatic effect light reflective unit 1,1a-1g is used in an illumination system 400 comprising an illuminator 410 to illuminate the reflective unit 1,1a-1g, such as a light source of white light. In a particular embodiment, the white light source has CCT> 5000K, preferably CCT>5500K, more preferably CCT> 6000K. The illuminator 410 of Fig. 28 comprises an emissive surface 412 from which it emits or projects light 411 onto the unit 1,1a-1g, preferably substantially completely covering the extension of the unit 1,1a-1g. In particular, as illustrated in the schematic detail of Fig. 28a, the reflective layer 10 and the chromatic diffusion layer 20 of the light reflective unit 1,1a-1g define a substantially convex surface facing towards the light source 410.

According to an alternative variant, illustrated in Fig. 29, the reflective layer 10 and the chromatic diffusion layer 20 of the light reflective unit 1,1a-1g define a surface positioned and configured so as to comprise at least two non-coplanar illuminated portions and mutually oriented such that the projection of the normals 413 in the centres of the two portions on a plane passing through the centres of the two portions and through a point belonging to an emissive surface of the illuminator 412 defines two mutually diverging directions.

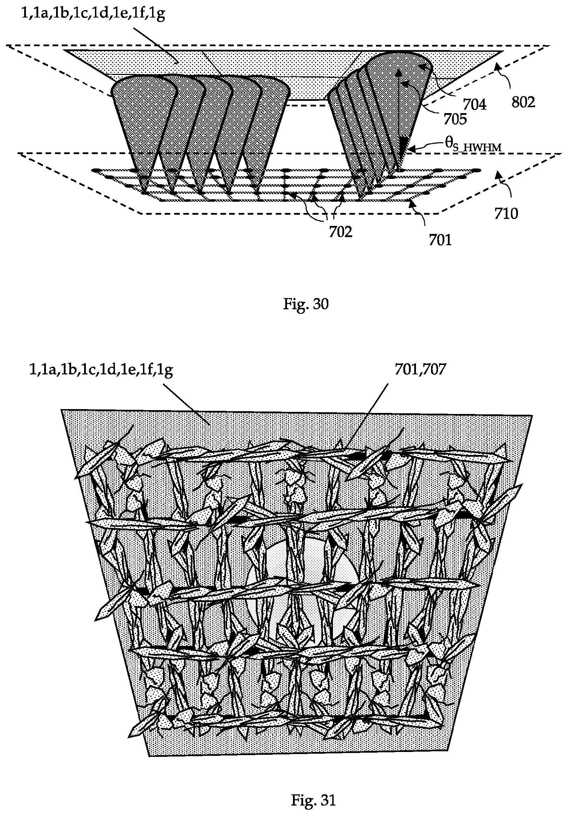

In an alternative embodiment illustrated in Fig. 30, the illumination system 700 comprises a support grid 701 configured such as to define a support plane 710 for a plurality of light sources 702. In the illustrated embodiment, the grid 701 has a square pitch, but in a completely equivalent way it is possible to make a grid with a hexagonal pitch or other regular pitch.

The light sources 702 are arranged on the support plane 710 defined by the support grid 701 in a manner substantially equidistant from each other at a source distance ds. In the illustrated embodiment, the light sources 702 are arranged on the vertices of the grid 701.

The chromatic effect light reflective unit 1; 1a - 1g, which can be made as a single panel or as a plurality of side-by-side and co-planar panels, is arranged co-planar to a reflection plane 802, for example parallel to the resting surface 710. The light sources of the plurality of light sources 702 are positioned and configured to substantially uniformly illuminate the at least one chromatic effect light reflective unit 1; 1a - 1g. Further, each light source 702 of the plurality of light sources is arranged and configured to generate a beam of light 704 with an angular source luminance profile having a peak along a main direction 705 and an angular half width at half maximum of the peak $\theta s_{\_HWHM}$ where the main direction 705 and the angular half width of source $\theta s_{\_HWHM}$ are common to all the light sources of the plurality of light sources 702, and the main direction 705 is inclined with respect to the normal to the reflection plane 802 by an angle comprised between 0° and 80°, preferably between 0° and 70°, more preferably between 0° and 60°. Furthermore, the minimum distance Dmin between each light source 702 and the chromatic effect light reflective unit 1; 1a - 1g measured along the main direction 705 satisfies the relationship: Dmin > 0.5 ds tan($\theta s_{\_HWHM}$), preferably Dmin > ds tan($\theta s_{\_HWHM}$), more preferably Dmin > 2 ds tan($\theta s_{\_HWHM}$).

In a variant of the invention the chromatic effect light reflective unit 1; 1a - 1g is configured to produce a reflected light having an angular luminance profile characterized by a peak in a neighbourhood of the specular reflection direction with angular half width at half maximum $\theta_{RF\_HWHM}$ when illuminated by a substantially unidirectional light, for example with HWHM divergence less than 0.5°, and a monochromatic light, for example with HWHM spectral width less than 2nm, and with wavelength of about 632 nm incident at an angle of 15° with respect to the normal on a surface of the same 1; 1a - 1g. In particular, the angular peak half width of the light reflected $\theta_{RF\_HWHM}$ by the chromatic effect light reflective unit 1; 1a - 1g satisfies the following relationship with respect to the angular peak half width of the beam of light 704 generated by each light source 702: $\theta_{RF\_HWHM} > \theta s_{\_HWHM}$, preferably $\theta_{RF\_HWHM} > 2 \theta s_{\_HWHM}$, more preferably $\theta_{RF\_HWHM} > 3 \theta s_{\_HWHM}$.

Advantageously, the Applicant has noted that the chromatic effect light reflective unit 1; 1a - 1g developed by him, without prejudice to the capability of originating a chromatic diffusion process similar to the Rayleigh scattering process, otherwise maintains the optical properties of the substrate, and in particular the optical properties of the substrate to reflect the component of the incident light complementary to that diffused by the nano-structure in accordance with the surface characteristics of the substrate itself. Specifically, if the substrate used is of the glossy type, that is, it is able, in the case of a flat surface, to reflect an image without distorting it, even the anodized sample will maintain the same capability of reflecting the images, the difference being in that the images reflected, if brighter than the rest of the scene, will have a different colour here from the original images, since the reflection is deprived of the diffuse component at small wavelengths. Conversely, if the substrate has a surface roughness capable, for example, of giving it the ability to blur a reflected image in a controlled manner, or rather to operate, as far as the reflection is concerned, as a low-angle white light diffuser or " frosted" diffuser, then also the anodized sample will maintain the same property, where the blurred reflected image will also have a different colour from the original image, since the reflection is deprived of the diffuse component at small wavelengths. The ability of a flat reflective surface to blur an image can be quantified by referring to the de-focusing angle, that is the angle that subtends the image of the reflection of a punctiform object. In the absence of any surface roughness, this angle is in fact substantially equal to zero, and the surface is of the glossy type. As the roughness increases, the de-focusing angle increases up to the limit of giving the surface the characteristic of substantially isotropic diffusion of the incident light. Operationally, in the context of the present invention, the de-focusing angle of a reflective surface is conventionally defined by the half width at half maximum or HWHM of the angular distribution of reflected light, in the case of incident light at 15° with respect to the normal to the surface, with a substantially unidirectional incident light, i.e. having half width at half maximum or HWHM of the angular distribution less than 1 °, and wavelength of about 632nm, i.e. the light produced by a HeNe laser. The choice of using a red light for the definition of the de-focusing angle is herein motivated by the need to minimize the effect of the diffusion produced by the nanostructure, which acts mainly at wavelengths in the opposite region of the visible spectrum, i.e. in the region of blue. As defined herein, the de-focusing angle coincides with the half width at half maximum or HWHM of the angular luminance profile $\theta_{RF\_HWHM}$ of the reflected light when the chromatic effect light reflective unit 1; 1a - 1g is illuminated by a substantially unidirectional and monochromatic light with wavelength of about 632nm incident at 15° with respect to the normal to a surface thereof 1; 1a - 1g.

Specifically, what the Applicant has observed is that the chromatic effect light reflective unit 1; 1a - 1g developed by him substantially does not alter, or alters in a very small way, the value of the de-focusing angle of the anodized sample with respect to that of the substrate, for example for de-focusing angles of the order of ten degrees it alters it by less than 30%, preferably by less than 20%, more preferably by less than 10%. This easily allows to realize chromatic reflectors having the desired value of the de-focusing angle by selecting the appropriate substrate, as different substrates with different values of the de-focusing angle are easily obtainable on the market, such as for example in the case of reflective aluminium substrates.

In a particular configuration, a reflective unit 1,1a-1g according to the present invention will have a de-focusing angle lower than 4 °, preferably lower than 3 °, preferably lower than 2°. Advantageously, this material can be used for devices aimed at producing the maximum chromatic contrast between reflected light and diffused light, i.e. to reproduce natural light effects and in particular the chromatic contrast between direct sunlight and diffused skylight, being the sunlight characterized by an angular luminance profile with half width at half maximum or HWHM of only 0.25°.

In a different configuration, a reflective unit 1,1a-1g according to the present invention will have a de-focusing angle comprised between 4 ° and 20°, preferably comprised between 5° and 15°, more preferably comprised between 6 ° and 12°. Advantageously, this material can be used for devices where it is intended to illuminate the material so that it, by diffusing the blue component of the light and reflecting the complementary one, produces the image of the sky, and in particular the image of a clear and serene sky. In this case, the property of the material to reflect, in addition to the light that illuminates it, also the image of the surrounding environment, significantly reduces the effectiveness of the reconstruction, especially if the surrounding environment is very bright. This drawback is particularly serious in the case, commercially of particular interest, of the reconstruction of large artificial skylights. While in fact for small skylights the luminance of the diffused light component, i.e. the luminance of the artificial sky, can be made very large, and in particular much greater than the luminance of the reflected environment, in the case of large skylights this is obviously impossible, either for reasons related to energy consumption, and because as the size of the skylight increases, the brightness of the environment it illuminates also increases. In such circumstances, having a material with a large de-focusing angle is certainly helpful since, despite the lower sharpness of the shadow produced, the image of the environment reflected in the reflector remains blurred and therefore less recognizable. In particular, if the scene comprises points or zones of small area and high brightness, the de-focusing process significantly reduces the brightness of these points in the reflection.

In a preferred embodiment, the coating layer 90 is configured in such a way that the Fresnel reflection of the first surface produces a reflected light having an angular luminance profile characterized by a peak in a neighbourhood of the direction of specular reflection, with angular half width at half maximum ($\theta_{COVER\_HWHM}$) when illuminated by a substantially unidirectional and monochromatic light and with wavelength of about 632nm incident at 15° with respect to the normal to a surface of the same 1; 1a - 1g, where the angular half width at half maximum ($\theta_{COVER\_HWHM}$) of the peak of the angular luminance profile of the coating layer 90 is equal to at least 2°, preferably to at least 3°, more preferably to at least 5°, or it is substantially equal to the de-focusing angle of the reflective unit 1,1a-1g.

Further advantageously, a material with a large de-focusing angle can be used to produce a reflected image of a single light source, i.e. a reflected image of a single sun, even when the material is illuminated by a plurality of sources separated from each other, provided that all the sources visible to the observer are subtended by an angle lower than the de-focusing angle of the material, for example at an angle 1.5 times lower, preferably at an angle 2 times lower, more preferably at an angle 3 times lower. Therefore, the availability of a material with a high de-focusing angle allows realizing devices adapted to reproduce the light and the image of the sky and the sun by using a plurality of light sources spaced between them for the simulation of the sun, for example light sources spaced between them by a distance greater than their size, i.e. a distance greater than the diameter of the circle that circumscribes the projection of each source of the plurality of sources on a plane orthogonal to the main direction of emission, i.e. the direction along which the angular luminance profile of the source exhibits its maximum value, where by source it is meant herein the light emitter comprising its own collimation optics.

In a variant of the invention illustrated in Fig. 31, the illumination system 700 comprises a masking structure 707 positioned and configured so as to prevent the view of the light sources 702 from the observer of the chromatic effect light reflective unit 1; 1a - 1g through the support grid 701. In particular, the masking structure 707 is a pergola comprising a distribution 708 of live or artificial plants. The illumination system 700 can further comprise a substantially transparent containment net (not shown) arranged between the masking structure and the chromatic effect light reflective unit. The containment net is in particular positioned and configured to prevent the growing plants from interfering between the sources and the chromatic effect light reflective unit 1; 1a - 1g.

More specifically, the present invention makes it possible to produce devices adapted to reproduce the light and the image of the sky and the sun by using for the simulation of the sun a plurality of light sources spaced from each other by a distance equal to at least twice, preferably 3 times, more preferably 4 times their size. This means making it possible for the observer to effectively look at the skylight, and in particular both at the sky and at the sun reflected in it, having the plurality of sources in a position interposed between his own eye and the skylight itself, the area obscured from the view being less, for example, at 1/4, preferably 1/9, more preferably 1/16 of the area that the observer would see in the absence of any obstruction from the view produced by the sources.

Advantageously, the proponent has observed that for such reduced values of the percentage of obscured area the observer perceives the plane where the sources are positioned and the plane behind which the image of the sun corresponds to as two distinct planes, without the occurrence of any conflict as regards the visual perception, or "visual cue" of the relative distances or depth of field. Advantageously, the image of the sun that is produced in this case is perceived at an infinite distance. In fact the observer, moving along any direction, for example along a direction parallel to a plane containing the sources, will always see the image of the sun under the same angle, or in other words he will see the sun following it moving, with respect to the sources, at the same speed with which he moves, a fact that involves the perception of the sun object at an infinite distance. Advantageously, the effect described is not limited by the size of the device, i.e. it can be obtained for an arbitrarily wide distribution of sources, and therefore for arbitrarily large artificial skylights, i.e. it allows the development of modular artificial skylights which can be arranged side by side in order to produce an artificial skylight of arbitrary size.

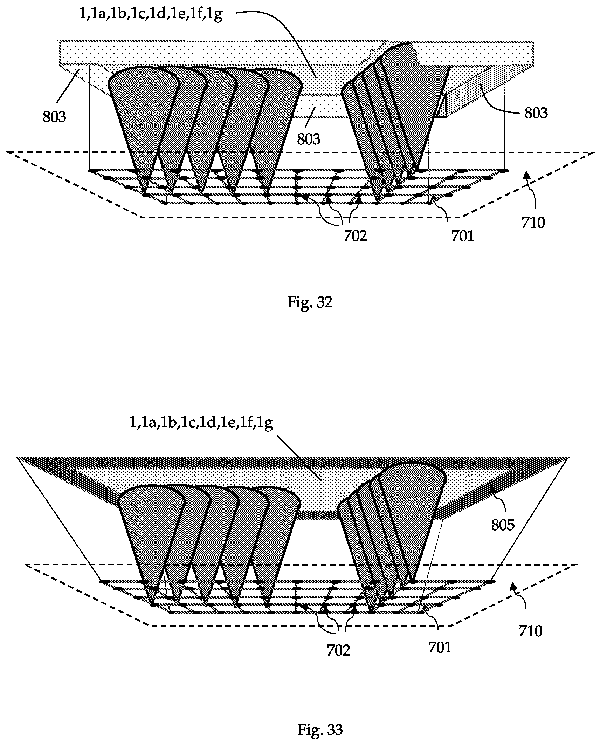

In a variant of the invention illustrated in Fig. 32, the illumination system 700 comprises a containment screen 803 arranged in proximity to the outer edges of the chromatic effect light reflective unit 1; 1a - 1g and configured in such a way as to prevent the light emitted by the light sources 702 from illuminating regions external and distant from the chromatic effect light reflective unit 1; 1a - 1g, and/or diffuse and/or reflect at least in part a light incident on them or on at least a portion of them. In particular, at least a portion of the containment screen 803 absorbs at least in part a light incident thereon.

In a variant of the invention illustrated in Fig. 33, the illumination system 700 comprises a strip of absorbent material 805 which at least partially surrounds an external perimeter of the chromatic effect light reflective unit 1; 1a - 1g, where the strip 805 is configured so as to absorb a light that reaches it coming from the plurality of light sources 702.

**Claims**

1.  Chromatic effect light reflective unit (1; 1a - 1g) comprising

    - a reflective layer (10) having at least one reflective surface (11), and
    - a chromatic diffusion layer (20) having a first surface (21) proximal to the reflective surface (11) and a second surface (23), opposite and substantially parallel to the first, configured to be illuminated by incident light,

    wherein the chromatic diffusion layer (20) comprises a nano-pillar (70) or nano-pore (30) structure in a first material having a first refractive index ($n1$), immersed in a second material having a second refractive index ($n2$) other than the first ($n1$), in which the first and second materials are substantially non-absorbing or transparent to electromagnetic radiations with wavelength included in the visible spectrum, substantially comprised in the range 380 nm $\leq \lambda \leq$ 740 nm,
    wherein the ratio ($n_M/n_m$) between a higher refractive index ($n_M$) and a lower refractive index ($n_m$) chosen between the first ($n1$) and the second ($n2$) refractive indexes is comprised between 1.05 and 3, and wherein the second material is air or a polymer, a resin, a silicone, an oxide that is transparent or substantially non-absorbent at least to electromagnetic radiations with wavelength included in the visible light spectrum and with refractive index comprised between 1.3 and 1.55,
    wherein the nano-pillars (71) or nano-pores (31) have a development along a main direction not parallel to the first surface (21) and the second surface (23) of the chromatic diffusion layer and the nano-pillars (70) or nano-pores (30) structure is **characterized by** a plurality of geometric parameters comprising:

    - a pillar diameter or pore diameter ($d_p$),
    - a pillar length or pore length ($l_p$) along said main development direction, and
    - a surface density of nano-pillars or nano-pores ($D_p$) defined in terms of number of nano-pillars or nano-pores per unit area of the second surface (23) and a structure (30,70) porosity ($P_p$) defined as the percentage of area occupied by the material having a lower refractive index ($n_m$) with respect to the area of the second surface (23), and

    wherein the pillar diameter or pore diameter ($d_p$) is comprised between 40 nm and 300 nm, the length ($l_p$) along the main development direction is comprised between 0.3 $\mu$m and 40 $\mu$m (0.3 $\mu$m $< l_p <$ 40 $\mu$m) and at least one between the surface density of nano-pillars or nano-pores ($D_p$) and the structure (30,70) porosity ($P_p$) is configured to provide a higher regular reflectance for wavelengths of incident light comprised in the range of red defined between 600 nm and 740 nm with respect to wavelengths of incident light comprised in the range of blue defined between 380 nm and 500 nm and a higher diffuse reflectance for wavelengths of incident light comprised in the range of blue defined between 380 nm and 500 nm than wavelengths of incident light comprised in the range of red defined between 600 nm and 740 nm.

2.  Unit (1; 1a - 1g) according to claim 1,
    in which the development along the main direction of the nano-pillars (71) or nano-pores (31) is **characterized by** a directional order parameter comprised between 0.7 and 1, such as between 0.9 and 1, calculated as:

$$S = 2<\cos^2\vartheta> - 1,$$

wherein $\vartheta$ is the angle comprised between the main development direction identified in a section plane transversal to the first surface (21) and the second surface (23) of the chromatic diffusion layer (20), and an axis associable with each nano-pillar or nano-pore of a plurality of nano-pillars or nano-pores lying in the section plane; and/or

wherein the nano-pillars (71) or the nano-pores (31) have a distribution with respect to the second surface (23) of the chromatic diffusion layer (20) divided into coherence areas extending less than 100 $\mu m^2$, preferably less than 10 $\mu m^2$, more preferably less than 1 $\mu m^2$, wherein each nano-pillar (71) or nano-pore (31) within one of said coherence area of the second surface (23) is substantially equidistant from adjacent nano-pillars (71) or adjacent nano-pores (31), present in the same coherence area.

3. Unit(1; 1a - 1g) according to claim 1 or 2, wherein the diameter ($d_p$) is comprised between 70 nm and 200 nm, such as comprised between 80 nm and 160 nm, and/or wherein the length along the main direction of the nano-pillars (71) or nano-pores (31) is comprised between 500 nm and 20 $\mu m$ (500 nm $< l_p <$ 20 $\mu m$), such as comprised between 500 nm and 20 $\mu m$ (500 nm $< l_p <$ 20 $\mu m$).

4. Unit (1; 1a - 1g) according to any one of the preceding claims, wherein the surface density ($D_p$) is such as to define an inter-pore or inter-pillar distance ($Ip$) less than 2.8 times the diameter ($d_p$), such as less than 2.6 times the diameter ($d_p$), or less than 2.4 times the diameter ($d_p$), and/or wherein the porosity ($P_p$) of the structure (30,70) is comprised between 20% and 80%, such as between 25% and 75%.

5. Unit (1; 1a - 1g) according to any one of the preceding claims, wherein the diameter ($d_p$) is greater than a second diameter threshold value ($d_{p\_threshold\_2}$) and/or the length ($l_p$) is greater than a second length threshold value ($l_{p\_threshold\_2}$) such as to provide a dichroic reflectance ratio ($r = R(\lambda_r, \theta)/ R(\lambda_b, \theta)$) of the electromagnetic radiation reflectances at the wavelengths of $\lambda_b$ = 450 nm and $\lambda_r$ = 630 nm of a luminous flux reflected by the unit (1; 1a - 1g) by regular reflection, increasing as the angle of incidence of a corresponding luminous flux incident on the unit (1; 1a - 1g) increases and exhibiting a variation of the dichroic reflectance value (r) higher than 5%, such as higher than 10%, or higher than 15% of the dichroic reflectance value (r) of a luminous flux reflected by the unit (1; 1a - 1g) by regular reflection in the case of a luminous flux incident on the unit (1; 1a - 1g) at an angle of incidence of about 10°.

6. Unit (1; 1a - 1g) according to claim 5, wherein

when the ratio ($n_M/n_m$) between the higher refractive index ($n_M$) and the lower refractive index ($n_m$) is comprised between 1.7 and 1.9, the second diameter threshold value ($d_{p\_threshold\_2}$) is comprised between 40 nm and 100 nm, such as between 60 nm and 80 nm, or it is equal to about 70 nm; and/or
when the ratio ($n_M/n_m$) between the higher refractive index ($n_M$) and the lower refractive index ($n_m$) is comprised between 1.7 and 1.9, the second length threshold value ($l_{p\_threshold\_2}$) is comprised between 300 nm and 2 $\mu m$, such as between 1 $\mu m$ and 1.7 $\mu m$, or it is equal to about 1.4 $\mu m$; and/or
when the ratio ($n_M/n_m$) between the higher refractive index ($n_M$) and the lower refractive index ($n_m$) is comprised between 1.1 and 1.3, the second length threshold value ($l_{p\_threshold\_2}$) is comprised between 4 $\mu m$ and 8 $\mu m$, such as between 5 $\mu m$ and 7 $\mu m$, or it is equal to about 6 $\mu m$.

7. Unit (1; 1a - 1g) according to any one of the preceding claims, wherein the diameter ($d_p$) is greater than a diameter threshold value ($d_{p\_threshold}$) and/or the length ($l_p$) is greater than a length threshold value ($l_{p\_threshold}$) such as to provide a variability in a correlated colour temperature of a luminous flux reflected by the unit (1; 1a - 1g) by regular reflection, as a function of an angle of incidence of a corresponding luminous flux incident on the unit (1; 1a

- 1g) with wavelength comprised between 380 nm and 740 nm, and wherein

the correlated colour temperature of a luminous flux reflected by the unit (1; 1a - 1g) by regular reflection decreases as the angle of incidence increases; and
a maximum Euclidean distance ($\Delta^R_{max}(u',v')$) between pairs of colour points of a regularly reflected beam that belong to a plurality of colour points of the regularly reflected beam and identified at different angles of incidence is greater than 0.02.

8. Unit (1; 1a - 1g) according to claim 7, wherein

when the ratio ($n_M/n_m$) between the higher refractive index ($n_M$) and the lower refractive index ($n_m$) is comprised between 1.7 and 1.9, the diameter threshold value ($d_{p\_threshold}$) is comprised between 50 nm and 120 nm, such as between 60 nm and 100 nm, or it is equal to about 80 nm; and/or

when the ratio ($n_M/n_m$) between the higher refractive index ($n_M$) and the lower refractive index ($n_m$) is comprised between 1.7 and 1.9, the length threshold value ($l_{p\_threshold}$) is comprised between 800 nm and 5 μm, such as between 1 μm and 4 μm, or it is equal to about 3 μm; and/or

when the ratio ($n_M/n_m$) between the higher refractive index ($n_M$) and the lower refractive index ($n_m$) is comprised between 1.1 and 1.3, the diameter threshold value ($d_{p\_threshold}$) is comprised between 150 nm and 220 nm, such as between 160 nm and 200 nm, or it is equal to about 180 nm.; and/or

when the ratio ($n_M/n_m$) between the higher refractive index ($n_M$) and the lower refractive index ($n_m$) is comprised between 1.1 and 1.3, the length threshold value ($l_{p\_threshold}$) is comprised between 6 μm and 12 μm, such as between 8 μm and 10 μm, or it is equal to about 9 μm.

9. Unit (1; 1a - 1g) according to any one of the preceding claims,

wherein the first material is a metal oxide, such as aluminium oxide (alumina), titanium oxide (titania) or zinc oxide; and/or

wherein the second material is air or is selected between a polymer, a resin, a silicone, a different oxide, said second material being at least partially non-absorbent, or transparent at least to electromagnetic radiations with wavelength included in the visible light spectrum and having a second refractive index ($n_2$) comprised between 1.3 and 1.55, such as between 1.49 and 1.52; and/or

wherein the second material is a resin based on soluble fluoropolymers, such as a polyurethane resin with a high fluorocarbon content, or a resin based on soluble fluoropolymers with second refractive index ($n_2$) comprised between 1.45 and 1.50, or with second refractive index ($n_2$) equal to 1.48.

10. Unit (1; 1a - 1g) according to any one of the preceding claims, wherein at least one between the surface density of nano-pillars or nano-pores ($D_p$) and the structure (30,70) porosity ($P_p$) is configured to provide a regular reflectance measured at the wavelength equal to 450 nm, comprised in the range from 0.05 to 0.95, such as from 0.1 to 0.9; and/or to provide a regular reflectance measured at the wavelength equal to 630 nm, at least 1.05 times, such as 1.2 times, or 1.6 times greater than the regular reflectance measured at the wavelength equal to 450 nm.

11. Unit (1; 1a - 1g) according to any one of the preceding claims, comprising a coating layer (90) placed at the second surface (23) of the chromatic diffusion layer (20), the coating layer (90) being at least partially non-absorbent or transparent to electromagnetic radiations with wavelength included in the visible spectrum; or comprising a coating layer (90) which at least partially fills the nano-pore (30) structure or in which the nano-pillar (70) structure is at least partially immersed, the coating layer (90) being at least partially non-absorbent or transparent to electromagnetic radiations with wavelength included in the visible spectrum and having a third refractive index (n3) comprised between 1.3 and 1.55, such as comprised between 1.41 and 1.52, or comprised between 1.45 and 1.50, and with a ratio ($n_1/n3$) between the first (n1) and the third (n3) refractive index that is comprised between 1.05 and 3.

12. Unit (1; 1a - 1g) according to any one of the preceding claims, comprising a stiffening composite layer (120) placed at a rear surface (12) of the reflective layer (10) opposite to its reflective surface (11), the stiffening composite layer (120) comprising a shimming panel (121) and a coating sheet (122),

wherein the shimming panel (121) optionally has a specific weight at least 5 times less than the specific weight of the coating sheet (122), preferably at least 10 times less than the specific weight of the coating sheet (122), and/or wherein the shimming panel (121) optionally has a thickness at least 2 times higher than the thickness of the coating sheet (122), preferably at least 5 times higher than the thickness of the coating sheet (122).

13. Unit (1; 1a - 1g) according to any one of the preceding claims, wherein the reflective layer (10) and the chromatic diffusion layer (20) are configured to jointly produce a reflected light having an angular luminance profile **characterized by** a peak in a neighbourhood of the direction of specular reflection with angular half width at half maximum ($\theta_{RF\_HWHM}$) when illuminated by a substantially unidirectional and monochromatic light and with wavelength of about 632 nm incident at 15° with respect to the normal to a surface of the same (1; 1a - 1g),

wherein the angular peak half width of the reflected light ($\theta_{RF\_HWHM}$) is less than 4°, preferably less than 3°, more preferably less than 2°; or
wherein the angular peak half width of the reflected light ($\theta_{RF\_HWHM}$) is comprised between 4° and 20°, preferably comprised between 5° and 15°, more preferably comprised between 6° and 12°.

14. Coating element (2) comprising:

- at least one chromatic effect light reflective unit (1; 1a - 1g) according to one of the preceding claims;
- a support structure (40; 10), said support structure (40; 10) being configured to mechanically support the at least one unit (1; 1a - 1g) so that the second surface (23) of the chromatic diffusion layer (20) faces the external environment, and
- coupling means (50), configured to allow a mechanical coupling of the support structure (40; 10) to a bearing element.

15. Illumination system (200) comprising:

- at least one chromatic effect light reflective unit (1; 1a - 1g) according to one of claims 1 to 13; and
- at least one illuminator (210,310,410,702) to illuminate the at least one chromatic effect light reflective unit (1; 1a - 1g), the illuminator (210,310,702) being configured to emit or project a cone of light which strikes at least partially on the second surface (23) of the chromatic diffusion layer (20) configured to be illuminated by incident light.

**Patentansprüche**

1. Farbeffekt-Lichtreflexionseinheit (1; 1a-1g), umfassend:

- eine reflektierende Schicht (10) mit mindestens einer reflektierenden Oberfläche (11), und
- eine Farbdiffusionsschicht (20) mit einer ersten Oberfläche (21) in der Nähe der reflektierenden Oberfläche (11) und einer zweiten Oberfläche (23), welche der ersten gegenüberliegt und im Wesentlichen parallel zu dieser verläuft und dazu eingerichtet ist, durch einfallendes Licht beleuchtet zu werden,

wobei die Farbdiffusionsschicht (20) eine Nanosäulen- (70) oder Nanoporenstruktur (30) in einem ersten Material mit einem ersten Brechungsindex ($n1$) umfasst, das in ein zweites Material mit einem zweiten Brechungsindex ($n2$), der sich von dem ersten ($n1$) unterscheidet, eingetaucht ist, wobei das erste und das zweite Material im Wesentlichen nicht absorbierend oder transparent für elektromagnetische Strahlung mit einer Wellenlänge im sichtbaren Spektrum sind, die im Wesentlichen im Bereich $380\ nm \leq \lambda \leq 740\ nm$ liegt, wobei das Verhältnis ($n_M/n_m$) zwischen einem höheren Brechungsindex ($n_M$) und einem niedrigeren Brechungsindex ($n_m$), der zwischen dem ersten ($n1$) und dem zweiten ($n2$) Brechungsindex gewählt wird, zwischen 1.05 und 3 liegt, und wobei das zweite Material Luft oder ein Polymer, ein Harz, ein Silikon, ein Oxid ist, das zumindest für elektromagnetische Strahlung mit einer Wellenlänge im sichtbaren Lichtspektrum transparent oder im Wesentlichen nicht absorbierend ist und einen Brechungsindex zwischen 1,3 und 1,55 aufweist,
wobei die Nanosäulen (71) oder Nanoporen (31) eine Hauptentwicklungsrichtung aufweisen, die nicht parallel zu der ersten Oberfläche (21) und der zweiten Oberfläche (23) der Farbdiffusionsschicht verläuft, und die Struktur der Nanosäulen (70) oder Nanoporen (30) durch eine Vielzahl von geometrischen Parametern gekennzeichnet ist, die umfassen:

- einen Säulendurchmesser oder Porendurchmesser ($d_p$),
- eine Säulenlänge oder Porenlänge ($l_p$) entlang der genannte Hauptentwicklungsrichtung und
- eine Oberflächendichte von Nanosäulen oder Nanoporen ($D_p$), die als Anzahl von Nanosäulen oder Nanoporen pro Flächeneinheit der zweiten Oberfläche (23) definiert ist, und eine Porosität ($P_p$) der Struktur (30, 70), die als der prozentuale Anteil der von dem Material mit einem niedrigeren Brechungsindex ($n_m$) eingenommenen Fläche in Bezug auf die Fläche der zweiten Oberfläche (23) definiert ist, und

wobei der Säulendurchmesser oder Porendurchmesser ($d_p$) zwischen 40 nm und 300 nm liegt, die Länge ($l_p$) entlang der Hauptentwicklungsrichtung zwischen 0,3 μm und 40 μm liegt (0,3 μm < $l_p$)< 40 μm) und mindestens eine zwischen der Oberflächendichte der Nanosäulen oder Nanoporen ($D_p$) und der Porosität ($P_p$) der Struktur (30, 70) dazu eingerichtet ist, ein höheres regelmäßiges Reflexionsvermögen für Wellenlängen des einfallenden Lichts, die in dem zwischen 600 nm und 740 nm definierten Bereich von Rot liegen, in Bezug auf Wellenlängen des einfallenden Lichts, die in dem zwischen 380 nm und 500 nm definierten Bereich von Blau liegen, und ein höheres diffuses Reflexionsvermögen für Wellenlängen des einfallenden Lichts, die in dem zwischen 380 nm und 500 nm definierten Bereich von Blau liegen, als Wellenlängen des einfallenden Lichts, die in dem zwischen 600 nm und 740 nm definierten Bereich von Rot liegen, bereitzustellen.

2. Einheit (1; 1a-1g) nach Anspruch 1,

in der die Hauptentwicklungsrichtung der Nanosäulen (71) oder Nanoporen (31) durch einen gerichteten Ordnungsparameter zwischen 0,7 und 1, beispielsweise zwischen 0,9 und 1, gekennzeichnet ist, berechnet als:

$$S = 2 <\cos^2\vartheta> - 1,$$

wobei $\vartheta$ der Winkel ist, der zwischen der Hauptentwicklungsrichtung, die in einer Schnittebene quer zur ersten Oberfläche (21) und zur zweiten Oberfläche (23) der Farbdiffusionsschicht (20) identifiziert wird, und einer Achse, die mit jeder Nanosäule oder Nanopore einer Vielzahl von in der Schnittebene angeordneten Nanosäulen oder Nanoporen assoziierbar ist, gebildet wird; und/oder

wobei die Nanosäulen (71) oder die Nanoporen (31) eine Verteilung in Bezug auf die zweite Oberfläche (23) der Farbdiffusionsschicht (20) aufweisen, die in Kohärenzbereiche unterteilt ist, die sich über weniger als 100 $\mu m^2$, vorzugsweise weniger als 10 $\mu m^2$ erstrecken, vorzugsweise weniger als 1 $\mu m^2$, wobei jede Nanosäule (71) oder Nanopore (31) innerhalb eines der genannten Kohärenzbereiche der zweiten Oberfläche (23) im Wesentlichen äquidistant zu benachbarten Nanosäulen (71) oder benachbarten Nanoporen (31) ist, die in demselben Kohärenzbereich vorhanden sind.

3. Einheit (1; 1a-1g) nach Anspruch 1 oder 2, wobei der Durchmesser ($d_p$) zwischen 70 nm und 200 nm liegt, beispielsweise zwischen 80 nm und 160 nm, und/oder wobei die Länge entlang der Hauptrichtung der Nanosäulen (71) oder Nanoporen (31) zwischen 500 nm und 20 $\mu m$ liegt (500 nm $< l_p <$ 20 $\mu m$), wie beispielsweise zwischen 500 nm und 20 $\mu m$ (500 nm $< l_p <$ 20 $\mu m$).

4. Einheit (1; 1a-1g) nach einem der vorhergehenden Ansprüche, wobei die Oberflächendichte ($D_p$) so beschaffen ist, dass sie einen Abstand ($l_p$) zwischen den Poren oder zwischen den Säulen definiert, der kleiner als das 2,8-fache des Durchmessers ($d_p$), beispielsweise kleiner als das 2,6-fache des Durchmessers ($d_p$) oder kleiner als das 2,4-fache des Durchmessers ($d_p$) ist, und/oder wobei die Porosität ($P_p$) der Struktur (30, 70) zwischen 20 % und 80 %, beispielsweise zwischen 25 % und 75 % liegt.

5. Einheit (1; 1a-1g) nach einem der vorhergehenden Ansprüche, wobei der Durchmesser ($d_p$) größer ist als ein zweiter Durchmesser-Schwellenwert ($d_{p\_threshold\_2}$) und/oder die Länge ($l_p$) größer ist als ein zweiter Längen-Schwellenwert ($l_{p\_threshold\_2}$), so dass ein dichroitisches Reflexionsverhältnis (r = R($\lambda_r$, $\theta$)/ R($\lambda_b$, $\theta$)) der Reflexionsgrade der elektromagnetischen Strahlung bei den Wellenlängen $\lambda_b$ = 450 nm und $\lambda_r$ = 630 nm eines Lichtstroms, der von der Einheit (1; 1a-1g) durch gleichmäßige Reflexion reflektiert wird, zunimmt, wenn der Einfallswinkel eines entsprechenden Lichtstroms, der auf die Einheit (1; 1a-1g) einfällt, zunimmt, und eine Variation des dichroitischen Reflexionswertes (r) von mehr als 5 %, beispielsweise mehr als 10 %, oder mehr als 15 % des dichroitischen Reflexionswertes (r) eines Lichtstroms, der von der Einheit (1; 1a-1g) durch gleichmäßige Reflexion reflektiert wird, im Fall eines Lichtstroms, der auf die Einheit (1; 1a-1g) unter einem Einfallswinkel von etwa 10° einfällt, aufweist.

6. Einheit (1; 1a-1g) nach Anspruch 5, wobei

wenn das Verhältnis ($n_M/n_m$) zwischen dem höheren Brechungsindex ($n_M$) und dem niedrigeren Brechungsindex ($n_m$) zwischen 1,7 und 1,9 liegt, der zweite Durchmesser-Schwellenwert ($d_{p\_threshold\_2}$) zwischen 40 nm und 100 nm, beispielsweise zwischen 60 nm und 80 nm, liegt oder etwa 70 nm beträgt; und/oder

wenn das Verhältnis ($n_M/n_m$) zwischen dem höheren Brechungsindex ($n_M$) und dem niedrigeren Brechungsindex ($n_m$) zwischen 1,7 und 1,9 liegt, der zweite Längen-Schwellenwert ($l_{p\_threshold\_2}$) zwischen 300 nm und 2 $\mu m$ liegt, beispielsweise zwischen 1 $\mu m$ und 1,7 $\mu m$, oder etwa 1,4 $\mu m$ beträgt; und/oder

wenn das Verhältnis ($n_M/n_m$) zwischen dem höheren Brechungsindex ($n_M$) und dem niedrigeren Brechungsindex ($n_m$) zwischen 1,1 und 1,3 liegt, liegt der zweite Längen-Schwellenwert ($l_{p\_threshold\_2}$) zwischen 4 $\mu m$ und 8 $\mu m$, beispielsweise zwischen 5 $\mu m$ und 7 $\mu m$, oder er ist gleich etwa 6 $\mu m$.

7. Einheit (1; 1a-1g) nach einem der vorhergehenden Ansprüche, wobei der Durchmesser ($d_p$) größer ist als ein Durchmesser-Schwellenwert ($d_{p\_threshold}$) und/oder die Länge ($l_p$) größer ist als ein Längen-Schwellenwert ($l_{p\_threshold}$), so dass eine Variabilität in einer korrelierten Farbtemperatur eines von der Einheit (1; 1a-1g) durch regelmäßige Reflexion reflektiert wird, als eine Funktion eines Einfallswinkels eines entsprechenden Lichtstroms, der auf die Einheit (1; 1a-1g) mit einer Wellenlänge zwischen 380 nm und 740 nm einfällt, und wobei

die korrelierte Farbtemperatur eines Lichtstroms, der von der Einheit (1; 1a-1g) durch gleichmäßige Reflexion reflektiert wird, mit zunehmendem Einfallswinkel abnimmt; und
ein maximaler euklidischer Abstand ($\Delta^R_{max}(u', v')$) zwischen Paaren von Farbpunkten eines regelmäßig reflektierten Strahls, die zu einer Vielzahl von Farbpunkten des regelmäßig reflektierten Strahls gehören und unter verschiedenen Einfallswinkeln identifiziert werden, größer als 0,02 ist.

8. Einheit (1; 1a-1g) nach Anspruch 7, wobei

wenn das Verhältnis ($n_M/n_m$) zwischen dem höheren Brechungsindex ($n_M$) und dem niedrigeren Brechungsindex ($n_m$) zwischen 1,7 und 1,9 liegt, der Durchmesser-Schwellenwert ($d_{p\_threshold}$) zwischen 50 nm und 120 nm, beispielsweise zwischen 60 nm und 100 nm, liegt oder gleich etwa 80 nm beträgt; und/oder
wenn das Verhältnis ($n_M/n_m$) zwischen dem höheren Brechungsindex ($n_M$) und dem niedrigeren Brechungsindex ($n_m$) zwischen 1,7 und 1,9 liegt, der Längen-Schwellenwert ($l_{p\_threshold}$) zwischen 800 nm und 5 $\mu$m, beispielsweise zwischen 1 $\mu$m und 4 $\mu$m, liegt oder etwa 3 $\mu$m beträgt; und/oder
wenn das Verhältnis ($n_M/n_m$) zwischen dem höheren Brechungsindex ($n_M$) und dem niedrigeren Brechungsindex ($n_m$) zwischen 1,1 und 1,3 liegt, der Durchmesser-Schwellenwert ($d_{p\_threshold}$) zwischen 150 nm und 220 nm, beispielsweise zwischen 160 nm und 200 nm, liegt oder etwa 180 nm beträgt; und/oder
wenn das Verhältnis ($n_M/n_m$) zwischen dem höheren Brechungsindex ($n_M$) und dem niedrigeren Brechungsindex ($n_m$) zwischen 1,1 und 1,3 liegt, der Längen-Schwellenwert ($l_{p\_threshold}$) zwischen 6 $\mu$m und 12 $\mu$m, beispielsweise zwischen 8 $\mu$m und 10 $\mu$m, liegt oder etwa 9 $\mu$m beträgt.

9. Einheit (1; 1a-1g) nach einem der vorhergehenden Ansprüche,

wobei das erste Material ein Metalloxid ist, wie Aluminiumoxid (Aluminiumoxid), Titanoxid (Titandioxid) oder Zinkoxid; und/oder
wobei das zweite Material Luft ist oder aus einem Polymer, einem Harz, einem Silikon oder einem anderen Oxid ausgewählt ist, wobei das genannte zweite Material zumindest teilweise nicht absorbierend oder zumindest für elektromagnetische Strahlung mit einer Wellenlänge im sichtbaren Lichtspektrum transparent ist und einen zweiten Brechungsindex ($n_2$) zwischen 1,3 und 1,55, wie beispielsweise zwischen 1,49 und 1,52, aufweist; und/oder
wobei das zweite Material ein Harz auf der Basis von löslichen Fluorpolymeren, wie ein Polyurethanharz mit einem hohen Fluorkohlenstoffgehalt, oder ein Harz auf der Basis von löslichen Fluorpolymeren mit einem zweiten Brechungsindex ($n_2$) zwischen 1,45 und 1,50 oder mit einem zweiten Brechungsindex ($n_2$) gleich 1,48 ist.

10. Einheit (1; 1a-1g) nach einem der vorhergehenden Ansprüche, wobei mindestens eine der beiden Größen, nämlich die Oberflächendichte der Nanosäulen oder Nanoporen ($D_p$) und die Porosität ($P_p$) der Struktur (30, 70), dazu eingerichtet ist, ein regelmäßiges Reflexionsvermögen, gemessen bei einer Wellenlänge von 450 nm, im Bereich von 0,05 bis 0,95, beispielsweise von 0,1 bis 0,9; und/oder ein regelmäßiges Reflexionsvermögen, gemessen bei der Wellenlänge von 630 nm, bereitzustellen, das mindestens 1,05 mal, beispielsweise 1,2 mal oder 1,6 mal größer als das regelmäßige Reflexionsvermögen, gemessen bei der Wellenlänge von 450 nm, ist.

11. Einheit (1; 1a-1g) nach einem der vorhergehenden Ansprüche, umfassend eine Beschichtungsschicht (90), die auf der zweiten Oberfläche (23) der Farbdiffusionsschicht (20) angeordnet ist, wobei die Beschichtungsschicht (90) zumindest teilweise nicht absorbierend oder transparent für elektromagnetische Strahlung mit einer im sichtbaren Spektrum enthaltenen Wellenlänge ist; oder
umfassend eine Beschichtungsschicht (90), die die Nanoporenstruktur (30) zumindest teilweise ausfüllt oder in die die Nanosäulenstruktur (70) zumindest teilweise eingetaucht ist, wobei die Beschichtungsschicht (90) zumindest teilweise nicht absorbierend oder transparent für elektromagnetische Strahlung mit einer Wellenlänge im sichtbaren Spektrum ist und einen dritten Brechungsindex (n3) zwischen 1.3 und 1,55, beispielsweise zwischen 1,41 und 1,52, oder zwischen 1,45 und 1,50, und mit einem Verhältnis ($n1/n3$) zwischen dem ersten ($n1$) und dem dritten ($n3$) Brechungsindex, das zwischen 1,05 und 3 liegt.

**12.** Einheit (1; 1a-1g) nach einem der vorhergehenden Ansprüche, die eine Versteifungsverbundschicht (120) umfasst, die an einer hinteren Oberfläche (12) der reflektierenden Schicht (10) gegenüber ihrer reflektierenden Oberfläche (11) angeordnet ist, wobei die Versteifungsverbundschicht (120) eine Shim-Platte (121) und eine Beschichtungsfolie (122) umfasst,

wobei die Shim-Platte (121) optional ein spezifisches Gewicht aufweist, das mindestens 5-mal geringer ist als das spezifische Gewicht der Beschichtungsfolie (122), vorzugsweise mindestens 10-mal geringer als das spezifische Gewicht der Beschichtungsfolie (122), und/oder
wobei die Shim-Platte (121) optional eine Dicke aufweist, die mindestens 2-mal höher ist als die Dicke der Beschichtungsfolie (122), vorzugsweise mindestens 5-mal höher als die Dicke der Beschichtungsfolie (122).

**13.** Einheit (1; 1a-1g) nach einem der vorhergehenden Ansprüche, wobei die Reflexionsschicht (10) und die Farbdiffusionsschicht (20) dazu eingerichtet sind, gemeinsam ein reflektiertes Licht mit einem Winkelleuchtdichteprofil zu erzeugen, das durch eine Spitze in der Nähe der Richtung der spiegelnden Reflexion mit einer Winkelhalbwertsbreite bei halbem Maximum ($\theta_{RF\_HWHM}$) gekennzeichnet ist, wenn es durch ein im Wesentlichen unidirektionales und monochromatisches Licht mit einer Wellenlänge von etwa 632 nm beleuchtet wird, das unter einem Winkel von 15° in Bezug auf die Normale auf eine Oberfläche derselben (1; 1a-1g) einfällt,

wobei die Winkelspitzenhalbwertsbreite des reflektierten Lichts ($\theta_{RF\_HWHM}$) weniger als 4°, vorzugsweise weniger als 3°, besonders bevorzugt weniger als 2° beträgt; oder
wobei die Winkelspitzenhalbwertsbreite des reflektierten Lichts ($\theta_{RF\_HWHM}$) zwischen 4° und 20°, vorzugsweise zwischen 5° und 15°, besonders bevorzugt zwischen 6° und 12° liegt.

**14.** Beschichtungselement (2), umfassend:

- mindestens eine Farbeffekt-Lichtreflexionseinheit (1; 1a-1g) nach einem der vorhergehenden Ansprüche;
- eine Trägerstruktur (40; 10), wobei die genannte Trägerstruktur (40; 10) dazu eingerichtet ist, die mindestens eine Einheit (1; 1a-1g) mechanisch derart zu tragen, dass die zweite Oberfläche (23) der Farbdiffusionsschicht (20) der äußeren Umgebung zugewandt ist, und
- Kopplungsmittel (50), die dazu eingerichtet sind, eine mechanische Kopplung der Trägerstruktur (40; 10) mit einem Lagerelement zu ermöglichen.

**15.** Beleuchtungssystem (200), umfassend:

- mindestens eine Farbeffekt-Lichtreflexionseinheit (1; 1a-1g) nach einem der Ansprüche 1 bis 13; und
- mindestens eine Beleuchtungseinrichtung (210, 310, 410, 702) zum Beleuchten der mindestens einen Farbeffekt-Lichtreflexionseinheit (1; 1a-1g), wobei die Beleuchtungseinrichtung (210, 310, 702) dazu eingerichtet ist, einen Lichtkegel zu emittieren oder zu projizieren, der zumindest teilweise auf die zweite Oberfläche (23) der Farbdiffusionsschicht (20) trifft, die dazu eingerichtet ist, von einfallendem Licht beleuchtet zu werden

**Revendications**

**1.** - Unité de réflexion de lumière à effet chromatique (1 ; la-lg) comprenant :

- une couche réfléchissante (10) ayant au moins une surface réfléchissante (11) ; et
- une couche de diffusion chromatique (20) ayant une première surface (21) proximale par rapport à la surface réfléchissante (11) et une seconde surface (23), opposée et sensiblement parallèle à la première, configurée pour être éclairée par une lumière incidente,

dans laquelle la couche de diffusion chromatique (20) comprend une structure à nanopiliers (70) ou à nanopores (30) dans un premier matériau ayant un premier indice de réfraction (*nl*), immergé dans un second matériau ayant un second indice de réfraction (*n2*) autre que le premier (*nl*), dans laquelle les premier et second matériaux sont sensiblement non absorbants ou transparents aux radiations électromagnétiques avec une longueur d'onde comprise dans le spectre visible, sensiblement comprise dans la plage 380 nm $\leq \lambda \leq$ 740 nm,
dans laquelle le rapport ($n_M/n_m$) entre un indice de réfraction supérieur ($n_M$) et un indice de réfraction inférieur ($n_m$) choisi entre le premier (*nl*) et le second (*n2*) indice de réfraction est compris entre 1,05 et 3, et dans laquelle le second matériau est l'air ou un polymère, une résine, un silicone, un oxyde qui est transparent ou sensiblement non absorbant au moins aux radiations électromagnétiques avec une longueur d'onde comprise dans le spectre de lumière visible et avec un indice de réfraction compris entre 1,3 et 1,55, dans lequel les nano-piliers (71) ou nano-pores (31) ont un développement le long d'une direction principale non parallèle à la première surface (21) et à la seconde surface (23) de la couche de diffusion chromatique et la structure à nano-piliers (70) ou à nano-pores (30) est **caractérisée par** une pluralité de paramètres géométriques comprenant :

- un diamètre de pilier ou diamètre de pore ($d_p$);
- une longueur de pilier ou longueur de pore ($l_p$) le long de ladite direction principale de développement ; et
- une densité surfacique de nanopiliers ou nanopores ($D_p$) définie en termes de nombre de nanopiliers ou nanopores par unité d'aire de la seconde surface (23) et une porosité ($P_p$) de structure (30,70) définie comme le pourcentage de surface occupée par le matériau ayant un indice de réfraction inférieur ($n_m$) par rapport à l'aire de la seconde surface (23) ; et

dans laquelle le diamètre de pilier ou diamètre de pore ($d_p$) est compris entre 40 nm et 300 nm, la longueur ($l_p$) le long de la direction principale de développement est comprise entre 0,3 $\mu$m et 40 $\mu$m (0,3 $\mu$m < $l_p$ < 40 $\mu$m) et au moins l'une entre la densité surfacique de nano-piliers ou nano-pores ($D_p$) et la porosité ($P_p$) de structure (30,70) est configurée pour fournir une réflectance régulière plus élevée pour des longueurs d'onde de lumière incidente comprises dans la plage de rouge définie entre 600 nm et 740 nm par rapport à des longueurs d'onde de lumière incidente comprises dans la plage de bleu définie entre 380 nm et 500 nm et une réflectance diffuse plus élevée pour des longueurs d'onde de lumière incidente comprises dans la plage de bleu définie entre 380 nm et 500 nm que pour des longueurs d'onde de lumière incidente comprises dans la plage de rouge définie entre 600 nm et 740 nm.

2. - Unité (1 ; Ia-Ig) selon la revendication 1,

dans laquelle le développement le long de la direction principale des nano-piliers (71) ou nano-pores (31) est **caractérisé par** un paramètre d'ordre directionnel compris entre 0,7 et 1, tel que 0,9 et 1, calculé comme :

$$S = 2<\cos^2\vartheta> -1,$$

où $\vartheta$ est l'angle compris entre la direction principale de développement identifiée dans un plan de coupe transversal à la première surface (21) et à la seconde surface (23) de la couche de diffusion chromatique (20), et un axe pouvant être associé à chaque nanopilier ou nanopore d'une pluralité de nanopiliers ou nanopores se trouvant dans le plan de coupe ; et/ou dans laquelle les nanopiliers (71) ou les nanopores (31) ont une distribution par rapport à la seconde surface (23) de la couche de diffusion chromatique (20) divisée en zones de cohérence s'étendant sur moins de 100 $\mu$m², de préférence sur moins de 10 $\mu$m², de façon davantage préférée sur moins de 1 $\mu$m², chaque nanopilier (71) ou nanopore (31) dans l'une desdites zones de cohérence de la seconde surface (23) étant sensiblement équidistant de nanopiliers adjacents (71) ou nanopores adjacents (31), présents dans la même zone de cohérence.

3. - Unité (1 ; Ia-Ig) selon l'une des revendications 1 ou 2, dans laquelle le diamètre ($d_p$) est compris entre 70 nm et 200 nm, tel que compris entre 80 nm et 160 nm, et/ou dans laquelle la longueur le long de la direction principale des nano-piliers (71) ou nano-pores (31) est comprise entre 500 nm et 20 $\mu$m (500 nm < $l_p$ < 20 $\mu$m), telle que comprise entre 500 nm et 20 $\mu$m (500 nm < $l_p$ < 20 $\mu$m).

4. - Unité (1 ; Ia-Ig) selon l'une quelconque des revendications précédentes, dans laquelle la densité surfacique ($D_p$) est telle qu'elle définit une distance inter-pores ou inter-piliers ($I_p$) de moins de 2,8 fois le diamètre ($d_p$), telle que de moins de 2,6 fois le diamètre ($d_p$), ou de moins de 2,4 fois le diamètre ($d_p$), et/ou dans laquelle la porosité ($P_p$) de la structure (30,70) est comprise entre 20 % et 80 %, telle qu'entre 25 % et 75 %.

5. - Unité (1 ; Ia -Ig) selon l'une quelconque des revendications précédentes, dans laquelle le diamètre ($d_p$) est supérieur à une seconde valeur de seuil de diamètre ($d_{p\_threshold\_2}$) et/ou la longueur ($l_p$) est supérieure à une seconde valeur de seuil de longueur ($l_{p\_threshold\_2}$) de manière à fournir un rapport de réflectance dichroïque (r = $R(\lambda_r,\theta)/R(\lambda_b,\theta)$) des

réflectances de radiation électromagnétique aux longueurs d'onde de $\lambda_b$ = 450 nm et $\lambda_r$ = 630 nm d'un flux lumineux réfléchi par l'unité (1 ; Ia-Ig) par réflexion régulière, augmentant lorsque l'angle d'incidence d'un flux lumineux correspondant incident sur l'unité (1 ; Ia-Ig) augmente et présentant une variation de la valeur de réflectance dichroïque (r) supérieure à 5 %, telle que supérieure à 10 %, ou supérieure à 15 % de la valeur de réflectance dichroïque (r) d'un flux lumineux réfléchi par l'unité (1 ; Ia-Ig) par réflexion régulière dans le cas d'un flux lumineux incident sur l'unité (1 ; Ia-Ig) sous un angle d'incidence d'environ 10°.

6. - Unité (1 ; Ia-Ig) selon la revendication 5, dans laquelle :

- lorsque le rapport $(n_M/n_m)$ entre l'indice de réfraction supérieur $(n_M)$ et l'indice de réfraction inférieur $(n_m)$ est compris entre 1,7 et 1,9, la seconde valeur de seuil de diamètre $(d_{p\_threshold\_2})$ est comprise entre 40 nm et 100 nm, telle qu'entre 60 nm et 80 nm, ou elle est égale à environ 70 nm ; et/ou
- lorsque le rapport $(n_M/n_m)$ entre l'indice de réfraction supérieur $(n_M)$ et l'indice de réfraction inférieur $(n_m)$ est compris entre 1,7 et 1,9, la seconde valeur de seuil de longueur $(l_{p\_threshold\_2})$ est comprise entre 300 nm et 2 $\mu$m, telle qu'entre 1 $\mu$m et 1,7 $\mu$m, ou elle est égale à environ 1,4 $\mu$m ; et/ou
- lorsque le rapport $(n_M/n_m)$ entre l'indice de réfraction supérieur $(n_M)$ et l'indice de réfraction inférieur $(n_m)$ est compris entre 1,1 et 1,3, la seconde valeur de seuil de longueur $(l_{p\_threshold\_2})$ est comprise entre 4 $\mu$m et 8 $\mu$m, telle qu'entre 5 $\mu$m et 7 $\mu$m, ou elle est égale à environ 6 $\mu$m.

7. - Unité (1 ; Ia-Ig) selon l'une quelconque des revendications précédentes, dans laquelle le diamètre $(d_p)$ est supérieur à une valeur de seuil de diamètre $(d_{p\_threshold\_2})$ et/ou la longueur $(l_p)$ est supérieure à une valeur de seuil de longueur $(l_{p\_threshold\_2})$ de façon à fournir une variabilité dans une température de couleur corrélée d'un flux lumineux réfléchi par l'unité (1 ; Ia-Ig) par réflexion régulière, en fonction d'un angle d'incidence d'un flux lumineux correspondant incident sur l'unité (1 ; Ia-Ig) avec une longueur d'onde comprise entre 380 nm et 740 nm, et dans laquelle

la température de couleur corrélée d'un flux lumineux réfléchi par l'unité (1 ; Ia-Ig) par réflexion régulière diminue à mesure que l'angle d'incidence augmente ; et
une distance euclidienne maximale $(\Delta^R_{max}(u',v'))$ entre des paires de points de couleur d'un faisceau régulièrement réfléchi qui appartiennent à une pluralité de points de couleurs du faisceau régulièrement réfléchi et identifiée à différents angles d'incidence est supérieure à 0,02.

8. - Unité (1 ; Ia-Ig) selon la revendication 7, dans laquelle :

- lorsque le rapport $(n_M/n_m)$ entre l'indice de réfraction supérieur $(n_M)$ et l'indice de réfraction inférieur $(n_m)$ est compris entre 1,7 et 1,9, la valeur de seuil de diamètre $(d_{p\_threshold\_2})$ est comprise entre 50 nm et 120 nm, telle qu'entre 60 nm et 100 nm, ou elle est égale à environ 80 nm ; et/ou
- lorsque le rapport $(n_M/n_m)$ entre l'indice de réfraction supérieur $(n_M)$ et l'indice de réfraction $(n_m)$ inférieur est compris entre 1,7 et 1,9, la valeur de seuil de longueur $(l_{p\_threshold\_2})$ est comprise entre 800 nm et 5 $\mu$m, telle qu'entre 1 $\mu$m et 4 $\mu$m, ou elle est égale à environ 3 $\mu$m ; et/ou
- lorsque le rapport $(n_M/n_m)$ entre l'indice de réfraction supérieur $(n_M)$ et l'indice de réfraction inférieur $(n_m)$ est compris entre 1,1 et 1,3, la valeur de seuil de diamètre $(d_{p\_threshold\_2})$ est comprise entre 150 nm et 220 nm, telle qu'entre 160 nm et 200 nm, ou elle est égale à environ 180 nm ; et/ou
- lorsque le rapport $(n_M/n_m)$ entre l'indice de réfraction supérieur $(n_M)$ et l'indice de réfraction inférieur $(n_m)$ est compris entre 1,1 et 1,3, la valeur de seuil de longueur $(l_{p\_threshold\_2})$ est comprise entre 6 $\mu$m et 12 $\mu$m, telle qu'entre 8 $\mu$m et 10 $\mu$m, ou elle est égale à environ 9 $\mu$m.

9. - Unité (1 ; Ia-Ig) selon l'une quelconque des revendications précédentes,
dans laquelle le premier matériau est un oxyde métallique, tel que l'oxyde d'aluminium (alumine), l'oxyde de titane (dioxyde de titane) ou l'oxyde de zinc ; et/ou

- dans laquelle le second matériau est l'air ou est choisi enre un polymère, une résine, un silicone, un oxyde différent, ledit second matériau étant au moins partiellement non absorbant, ou transparent au moins aux radiations électromagnétiques avec une longueur d'onde comprise dans le spectre de lumière visible et ayant un second indice de réfraction $(n_2)$ compris entre 1,3 et 1,55, tel qu'entre 1,49 et 1,52 ; et/ou
- dans laquelle le second matériau est une résine à base de fluoropolymères solubles, telle qu'une résine de polyuréthane à haute teneur en fluorocarbure, ou une résine à base de fluoropolymères solubles avec un second indice de réfraction $(n_2)$ compris entre 1,45 et 1,50, ou avec un second indice de réfraction $(n_2)$ égal à 1,48.

**10.** - Unité (1 ; Ia-Ig) selon l'une quelconque des revendications précédentes, dans laquelle au moins l'une entre la densité surfacique de nano-piliers ou nano-pores ($D_p$) et la porosité ($P_p$) de structure (30,70) est configurée pour fournir une réflectance régulière mesurée à la longueur d'onde égale à 450 nm, comprise dans la plage de 0,05 à 0,95, telle que de 0,1 à 0,9; et/ou pour fournir une réflectance régulière mesurée à la longueur d'onde égale à 630 nm, au moins 1,05 fois, telle que 1,2 fois, ou 1,6 fois plus grande que la réflectance régulière mesurée à la longueur d'onde égale à 450 nm.

**11.** - Unité (1 ; Ia-Ig) selon l'une quelconque des revendications précédentes, comprenant une couche de revêtement (90) placée sur la seconde surface (23) de la couche de diffusion chromatique (20), la couche de revêtement (90) étant au moins partiellement non absorbante ou transparente aux radiations électromagnétiques avec une longueur d'onde comprise dans le spectre visible ; ou
comprenant une couche de revêtement (90) qui remplit au moins partiellement la structure à nanopores (30) ou dans laquelle la structure à nanopiliers (70) est au moins partiellement immergée, la couche de revêtement (90) étant au moins partiellement non absorbante ou transparente aux radiations électromagnétiques avec une longueur d'onde comprise dans le spectre visible et ayant un troisième indice de réfraction ($n_3$) compris entre 1,3 et 1,55, tel que compris entre 1,41 et 1,52, ou compris entre 1,45 et 1,50, et avec un rapport ($n_1/n_3$) entre le premier ($n1$) et le troisième ($n3$) indice de réfraction qui est compris entre 1,05 et 3.

**12.** - Unité (1 ; Ia-Ig) selon l'une quelconque des revendications précédentes, comprenant une couche composite de rigidification (120) placée sur une surface arrière (12) de la couche réfléchissante (10) opposée à sa surface réfléchissante (11), la couche composite de rigidification (120) comprenant un panneau de calage (121) et une feuille de revêtement (122),
dans laquelle le panneau de calage (121) a facultativement un poids spécifique au moins 5 fois inférieur au poids spécifique de la feuille de revêtement (122), de préférence au moins 10 fois inférieur au poids spécifique de la feuille de revêtement (122), et/ou dans laquelle le panneau de calage (121) a facultativement une épaisseur au moins 2 fois supérieure à l'épaisseur de la feuille de revêtement (122), de préférence au moins 5 fois supérieure à l'épaisseur de la feuille de revêtement (122).

**13.** - Unité (1 ; Ia-Ig) selon l'une quelconque des revendications précédentes, dans laquelle la couche réfléchissante (10) et la couche de diffusion chromatique (20) sont configurées pour produire conjointement une lumière réfléchie ayant un profil de luminance angulaire **caractérisé par** un pic au voisinage de la direction de réflexion spéculaire avec une demi-largeur angulaire à mi-hauteur ($\theta_{RF\_HWHM}$) lorsqu'elle est éclairée par une lumière sensiblement unidirectionnelle et monochromatique et avec une longueur d'onde d'environ 632nm incidente à 15° par rapport à la normale à une surface de l'unité (1 ; Ia-Ig),

dans laquelle la demi-largeur de pic angulaire de la lumière réfléchie ($\theta_{RF\_HWHM}$) est inférieure à 4°, de préférence inférieure à 3°, de façon davantage préférée inférieure à 2° ; ou
dans laquelle la demi-largeur de pic angulaire de la lumière réfléchie ($\theta_{RF\_HWHM}$) est comprise entre 4° et 20°, de préférence comprise entre 5° et 15°, de façon davantage préférée comprise entre 6° et 12°.

**14.** - Élément de revêtement (2) comprenant :

- au moins une unité de réflexion de lumière à effet chromatique (1 ; Ia-Ig) selon l'une des revendications précédentes ;
- une structure de support (40 ; 10), ladite structure de support (40 ; 10) étant configurée pour supporter mécaniquement ladite au moins une unité (1 ; Ia-Ig) de telle sorte que la seconde surface (23) de la couche de diffusion chromatique (20) soit tournée vers l'environnement extérieur ; et
- des moyens de couplage (50), configurés pour permettre un couplage mécanique de la structure de support (40 ; 10) à un élément porteur.

**15.** - Système d'éclairage (200) comprenant :

- au moins une unité de réflexion de lumière à effet chromatique (1 ; Ia-Ig) selon l'une quelconque des revendications 1 à 13 ; et
- au moins un dispositif d'éclairage (210,310,410,702) pour éclairer ladite au moins une unité réfléchissante de lumière à effet chromatique (1 ; Ia-Ig), le dispositif d'éclairage (210,310,702) étant configuré pour émettre ou projeter un cône de lumière qui frappe au moins partiellement la seconde surface (23) de la couche de diffusion chromatique (20) configurée pour être éclairée par la lumière incidente.

1,1a,1b,1c,1d,1e,1f,1g

20

23

21

10

11

Fig.1

1

30

31

23

II

20

$n_1$

$n_2$

21

$t$

$l_p$

$l_p$

$d_p$

10

11

Fig.2

Fig.3

Fig.4

Fig.5

Fig.6

Fig.7

Fig.8

Fig.9

Fig.10

Fig.11

Fig.12

Fig.13

Fig.14

**Fig.15**

**Fig.16**

Fig.17

Fig.18

Fig.19

Fig.20

Fig.21

Fig.22

1f

90

23

20

Fig.23

10

11,21

1g

20

10

23

11,21

12

121  122

120

Fig.24

Fig.25

1,1a,1b,1c,1d,1e,1f,1g

Fig.26a

Fig.27a

Fig.27

EP 4 135 959 B1

400

1,1a,1b,1c,1d,1e,1f,1g

411

Fig.28

410

1,1a,1b,1c,1d,1e,1f,1g

411

412

410

Fig.28a

1,1a,1b,1c,1d,1e,1f,1g

413    413

412

410

Fig.29

1,1a,1b,1c,1d,1e,1f,1g

704
705
802

θ_S_HWHM

710

702
701

Fig. 30

1,1a,1b,1c,1d,1e,1f,1g

701,707

Fig. 31

1,1a,1b,1c,1d,1e,1f,1g

803

803

803

702

701

710

Fig. 32

1,1a,1b,1c,1d,1e,1f,1g

805

702

701

710

Fig. 33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2015001454 W

- EP 2016066995 W

**Non-patent literature cited in the description**

- Brilliant and tunable color of carbon-coated thin anodic aluminum oxide films. **WANG X et al.** APPLIED PHYSICS LETTERS. A I P PUBLISHING LLC, 06 July 2007, vol. 91, 11908-1, 11908-3

- **WOO LEE et al.** Porous Anodic Aluminum Oxide: Anodization and Templated Synthesis of Functional Nanostructures. *CHEMICAL REVIEWS*, 13 June 2014, vol. 114 (15), 7487-7556